# EUROPÄISCHE PATENTANMELDUNG

(11) **EP 4 821 765 A1**
(43) Veröffentlichungstag der Anmeldung: **14.10.2026**
(21) Anmeldenummer: 26170857.2
(22) Anmeldetag: 07.04.2026
(51) Int. Cl.: B60R 9/06, B60R 9/10

(54) **GELENKANBINDUNG FÜR EINEN FAHRRADTRÄGER UND FAHRRADTRÄGER**

(30) Priorität: 08.04.2025 DE 102025113831
(71) Anmelder: Neomotus GmbH, 83483 Bischofswiesen (DE)
(72) Erfinder: TREPPTE, Christina, 83483 Bischofswiesen (DE); BERGMANN, Alexander, 83483 Bischofswiesen (DE)
(74) Vertreter: Hoffmann Eitle

(57) **Zusammenfassung**

Eine Gelenkanbindung (1) für einen Fahrradträger (10) weist einen Hauptkörper (2) mit einer Anbindung (30) für eine Anhängerkupplung auf, eine Trägeraufnahme (4) zur Aufnahme eines Trägers (40), eine Achse (6) zur drehbaren Lagerung von Hauptkörper und Trägeraufnahme, und einen Verriegelungsmechanismus (20) zur Blockierung und Freigabe einer Rotation von Trägeraufnahme und Hauptkörper relativ zueinander um die Achse. Der Verriegelungsmechanismus weist zumindest einen, vorzugsweise zwei, in eine zur Axialrichtung der Achse parallele Verriegelungsrichtung verschiebbar angeordnete Verriegelungsbolzen (21) auf. Ein Fahrradträger weist diese Gelenkanbindung, einen Träger, der an einem Ende mit der Trägeraufnahme verbunden oder einstückig mit der Trägeraufnahme ausgebildet ist, zumindest einen Korb (80), zur Aufnahme eines Laufrades eines Fahrrades, der an einem anderen Ende des Trägers angeordnet ist, und eine Querstrebe (11) auf, die an dem Träger befestigt ist und sich im Wesentlichen quer zu einer Längsachse des Trägers erstreckt.

## Beschreibung

### TECHNISCHES GEBIET

Die vorliegende Erfindung betrifft eine Gelenkanbindung für einen Fahrradträger und einen Fahrradträger mit einer solchen Gelenkanbindung.

### STAND DER TECHNIK

Im Stand der Technik sind eine Vielzahl von Fahrradträgern unterschiedlicher Bauformen bekannt, die dem Transport von vornehmlich Fahrrädern, aber auch von anderen Sportgeräten, wie etwa Kayaks oder Ähnlichem, mit einem Kraftfahrzeug dienen.

So sind etwa Träger bekannt, die auf dem Dach des Fahrzeugs montiert werden. Diese haben den Nachteil, dass sie die Gesamthöhe des Fahrzeugs erhöhen und damit die freie Durchfahrt durch z.B. durch Parkhäuser, Tore usw. einschränken können. Ferner ist es umständlich und mühsam, insbesondere schwere Fahrräder zum Transport auf das Dach des Fahrzeugs zu heben.

Daneben sind Träger bekannt, die direkt an der Heckkappe eines Fahrzeugs befestigt werden. Zwar erhöhen diese Träger die Gesamthöhe des Fahrzeuges weniger als ein auf dem Dach montierter Träger, jedoch haben sie den Nachteil, dass sich die Heckklappe aufgrund des zusätzlichen Gewichts der Fahrräder nur noch schwer oder gar nicht mehr öffnen lässt, wenn Fahrräder an dem Träger montiert sind.

Ferner sind Träger bekannt, die an der Anhängerkupplung eines Fahrzeugs befestigt werden und welche ein oder mehrere Fahrräder in Fahrtrichtung des Fahrzeugs hintereinander aufnehmen können. Zwar erhöhen diese Träger die Gesamthöhe des Fahrzeuges nicht oder weniger als ein an der Heckklappe des Fahrzeugs befestigter Träger, jedoch haben diese den Nachteil, dass sich der Schwerpunkt des Trägers und des Fahrzeuges mit zunehmender Anzahl montierter Fahrräder immer weiter nach hinten verlagert. Auch lassen sich bei mehreren hintereinander montierten Fahrrädern, wenn das äußere Fahrrad montiert bleibt, die zwischen dem äußeren Fahrrad und der Heckklappe befindlichen Fahrräder nur schwer demontieren.

In jüngster Zeit wurden daher Fahrradträger entwickelt, die am Heck eines Fahrzeugs angeordnet werden und an denen Fahrräder senkrecht und in Fahrtrichtung des Fahrzeugs nebeneinander montiert werden. Diese bieten den Vorteil, dass sie die Gesamthöhe des Fahrzeugs nicht oder nur geringfügig erhöhen, den Schwerpunkt des Fahrzeugs nicht zu weit nach hinten verlagern und jedes Fahrrad einfach, gut zugänglich und unabhängig von den anderen Fahrrädern montiert und demontiert werden kann. Eine Schwierigkeit besteht jedoch in der Anbindung solcher Träger an Kraftfahrzeuge, insbesondere an Kraftfahrzeuge für den europäischen Markt, da die Fahrräder zum einen leicht zu montieren sein sollen, aber zum anderen ein Zugriff auf den Kofferraum weiterhin möglich sein soll.

Es ist daher eine Aufgabe der vorliegenden Erfindung eine Anbindung für einen Fahrradträger zu schaffen, der eine leichte und sichere Montage von Fahrrädern ermöglicht und dabei den Zugriff auf den Kofferraum des Fahrzeugs auch bei montierten Fahrrädern erlaubt.

### DARSTELLUNG DER ERFINDUNG

Die obige Aufgabe wird durch eine Gelenkanbindung nach Anspruch 1 und durch einen Fahrradträger mit einer solchen Gelenkanbindung nach Anspruch 11 gelöst. Weitere bevorzugte Ausgestaltungen sind in den abhängigen Ansprüchen wiedergegeben.

Gemäß der vorliegenden Erfindung weist eine Gelenkanbindung für einen Fahrradträger einen Hauptkörper mit einer Anbindung für eine Anhängerkupplung auf, eine Trägeraufnahme zur Aufnahme eines Trägers, eine Achse zur drehbaren Lagerung von Hauptkörper und Trägeraufnahme, und einen Verriegelungsmechanismus zur Blockierung und Freigabe einer Rotation von Trägeraufnahme und Hauptkörper relativ zueinander um die Achse. Der Verriegelungsmechanismus weist zumindest einen, vorzugsweise zwei, in eine zur Axialrichtung der Achse parallele Verriegelungsrichtung verschiebbar angeordnete Verriegelungsbolzen auf.

Die Achse ist vorzugsweise so ausgerichtet, dass die Axialrichtung der Achse im montierten Zustand der Gelenkanbindung quer zur Fahrtrichtung des Fahrzeugs verläuft. Der Verriegelungsbolzen kann einen runden Querschnitt aufweisen, kann aber auch einen nichtrunden Querschnitt, wie einen rechteckigen oder ovalen Querschnitt aufweisen. Der Verriegelungsmechanismus kann nur einen einzigen Verriegelungsbolzen aufweisen, es ist aber bevorzugt, dass der Verrieglungsmechanismus zwei Verriegelungsbolzen aufweist.

Durch diese Ausgestaltung ist es möglich, eine sichere Verbindung zwischen einem Träger, der vorzugsweise senkrecht steht und dem Transport von Fahrrädern oder Ähnlichem dient, und einem Fahrzeug herzustellen. Die drehbare Lagerung zwischen Hauptköper und Trägeraufnahme sorgt dafür, dass der von der Trägeraufnahme aufzunehmende Träger relativ zu dem Hauptkörper und damit relativ zu dem Fahrzeug gekippt werden kann. Dadurch wird bei montiertem Träger ein Zugriff auf den Kofferraum des Fahrzeugs ermöglicht, selbst wenn Fahrräder an dem Träger montiert sind. Durch eine zur Axialrichtung der Achse parallele Verschiebung des/der Verriegelungsbolzen ist eine besonders kompakte Ausführung des Verriegelungsmechanismus und eine besonders zuverlässige Blockierung der Rotation von Trägeraufnahme und Hauptkörper relativ zueinander möglich. Ferner ist/sind der/die in dieser Verriegelungsrichtung angeordnete(n) Verriegelungsbolzen weniger anfällig für vom Boden durch die Fahrt hochgewirbelte Verschmutzungen als etwa ein nach unten weisender Verriegelungsbolzen. Sollte dennoch Schmutz an den/die Verriegelungsbolzen gelangen, wird dieser durch die Bewegung des/der Verriegelungsbolzen nach innen und außen ebenfalls nach außen ausgetragen.

In einer bevorzugten Ausführungsform weist der Verriegelungsmechanismus eine Hülse auf, die mit der Trägeraufnahme verbunden ist und innerhalb derer der/die Verriegelungsbolzen axial geführt angeordnet sind.

Die Hülse dient der axialen Führung des/der Verriegelungsbolzen(s) und hat vorzugsweise eine innere Kontur, die einer äußeren Kontur des/der Verriegelungsbolzen(s) entspricht. Die Hülse kann eine äußere Kontur haben, die ihrer inneren Kontur entspricht, sodass sie eine konstante Wandstärke aufweist. Vorzugsweise ist die Hülse fest mit der Trägeraufnahme verbunden. Die Hülse kann zudem eine seitliche Öffnung aufweisen.

Durch diese Ausführungsform ist es möglich, ein Verkanten des/der Verriegelungsbolzen(s) durch dessen/deren Führung zu verhindern und die Zuverlässigkeit des Verriegelungsmechanismus zu erhöhen.

In einer bevorzugten Ausführungsform weist der Verriegelungsmechanismus ferner einen Tritthebel auf, der vorzugsweise um die Achse drehbar gelagert ist, und ein Koppelelement, das mit dem Tritthebel und dem Verriegelungsbolzen jeweils gelenkig verbunden ist Der Tritthebel ist zur Trägeraufnahme derart federvorgespannt, dass der Verriegelungsbolzen über das Koppelelement in der Verriegelungsrichtung nach außen gedrückt wird.

Der Tritthebel kann drehbar gelagert und so angeordnet sein, dass seine Drehachse mit der Achse, um die Hauptkörper und Trägeraufnahme relativ zueinander drehbar gelagert sind, zusammenfällt. Dadurch ist eine besonders kompakte Bauform möglich. Der Tritthebel kann aber auch drehbar gelagert und so angeordnet sein, dass seine Drehachse nicht mit der Achse zusammenfällt. Dadurch kann der Tritthebel unabhängig von der Achse, um die Hauptkörper und Trägeraufnahme drehbar gelagert sind, angeordnet werden, wodurch die geometrische Gestaltungsfreiheit erhöht wird. Das Koppelelement kann entweder direkt oder indirekt mit dem Tritthebel und dem Verriegelungsbolzen verbunden sein. Das heißt, zwischen Koppelelement und Tritthebel und zwischen Koppelelement und Verriegelungsbolzen kann jeweils ein weiteres Element angeordnet sein. Insbesondere kann zwischen Koppelelement und Tritthebel ein weiteres Element angeordnet sein, das mit dem Koppelelement und mit dem Tritthebel jeweils gelenkig verbunden ist.

Durch diese Ausführungsform ist es möglich, einen Verriegelungsmechanismus vorzusehen, der besonders ergonomisch, insbesondere mit dem Fuß, betätigt werden kann. Ferner kann durch das Kopplungselement der Verriegelungsmechanismus besonders kompakt und robust ausgeführt werden, da auf lange Umlenkwege und Drahtseile verzichtet werden kann. Schließlich erleichtert die Vorspannung von Tritthebel und Trägeraufnahme eine Verriegelung des Verriegelungsbolzen, da der/die Verriegelungsbolzen nach außen und damit auch in eine Verriegelungsposition gedrückt wird. Somit kann der Verriegelungsbolzen in einer Verriegelungsposition von sich aus und ohne weitere Betätigung einrasten.

In einer bevorzugten Ausführungsform ist der Tritthebel dadurch zur Trägeraufnahme vorgespannt, dass zumindest eine Feder, vorzugsweise Zugfeder, zwischen Tritthebel und Trägeraufnahme angeordnet ist und/oder dass zumindest eine Feder, vorzugsweise Druckfeder, an einer ins Innere des Hauptkörpers weisenden Stirnseite des Verriegelungsbolzens angeordnet ist.

Wenn der Verriegelungsmechanismus zwei Verriegelungsbolzen aufweist, kann eine Feder, vorzugsweise eine Druckfeder, zwischen den beiden einander zugewandten Stirnseiten der Verriegelungsbolzen vorgesehen sein, welche die beiden Verriegelungsbolzen nach außen drückt. Dadurch, dass der/die Verriegelungsbolzen über das Koppelelement mit dem Tritthebel verbunden sind, wir eine direkt auf den Tritthebel wirkende Federkraft auch auf den/die Verriegelungsbolzen ausgeübt und eine direkt auf den/die Verriegelungsbolzen wirkende Federkraft wird auch auf den Tritthebel ausgeübt.

Wenn eine Feder zwischen Tritthebel und Trägeraufnahme angeordnet ist, kann auf diese leichter zugegriffen werden, um diese zu montieren oder zu tauschen. Wenn eine Feder an einer Stirnseite des Verriegelungsbolzens bzw. zwischen den Stirnseiten zweier Verriegelungsbolzen angeordnet ist, und wenn der/Die Verriegelungsbolzen in einer Hülse geführt wird/werden, ist die Feder besser vor äußeren Einflüssen wie Schmutz oder Feuchtigkeit geschützt und somit weniger anfällig für Beschädigungen.

In einer bevorzugten Ausführungsform weist die Gelenkanbindung ferner ein Abdeckelement auf, das in einer Draufsicht auf eine Trittfläche des Tritthebels den Tritthebel vollständig abdeckt. Alternativ oder zusätzlich weist die Gelenkanbindung eine Tritthebelsicherung auf, die einen mit dem Tritthebel verbundenen Steg, eine Spange, und einen mit der Spange verbundenen Anker aufweist. Der Anker ist so angeordnet, dass er in einer gesicherten Position mit dem Steg in Anlage gelangt und eine Bewegung des Tritthebels sperrt und in einer entsicherten Position den Steg freigibt und eine Bewegung des Tritthebels ermöglicht.

Das Abdeckelement deckt eine Trittfläche des Tritthebels so ab, dass zwischen Abdeckelement und Trittfläche des Tritthebels ein Abstand vorhanden ist durch den der Tritthebel zugänglich ist, der Tritthebel aber von einer, dem Tritthebel abgewandten Seite des Abdeckelements nicht zugänglich ist. Die Spange der Tritthebelsicherung kann durch eine Feder, vorzugsweise eine Druckfeder, vorgespannt sein, sodass der mit der Spange verbundene Anker durch die Feder in die gesicherte Position vorgespannt wird.

Durch diese Ausgestaltung ist es möglich, eine unbeabsichtigte Betätigung des Verriegelungsmechanismus, insbesondere eine unbeabsichtigte Entriegelung, zu verhindern. Zum einen kann durch das Abdeckelement sichergestellt werden, dass etwa von oben in Richtung des Tritthebels fallende Objekte diesen nicht treffen und daher auch nicht betätigen können. Zum anderen kann durch die Tritthebelsicherung der Verriegelungsmechanismus blockiert werden, sodass selbst wenn ein fallendes Objekt auf den Tritthebel trifft, dieses den Verriegelungsmechanismus nicht betätigt bzw. entriegelt.

In einer bevorzugten Ausführungsform ist die Gelenkanbindung in eine Verriegelungsposition überführbar, in der eine Rotation zwischen Trägeraufnahme und Hauptkörper durch den Verriegelungsmechanismus blockiert ist, und die Gelenkanbindung ist in eine, vorzugsweise in zwei, von der Verriegelungsposition verschiedene Anschlagsposition(en) überführbar ist, in der/denen eine Rotation zwischen Trägeraufnahme und Hauptkörper zumindest in eine Drehrichtung blockiert ist.

Die Verriegelungsposition ist eine Position, in welcher der Träger während der Fahrt transportiert wird und in welcher der mit der Trägeraufnahme verbundene Träger vorzugsweise senkrecht steht. Die Anschlagsposition ist eine Position, in welcher die Trägeraufnahme gegenüber der Verriegelungsposition ausgelenkt bzw. abgekippt ist, um eine Montage und Demontage eines Fahrrads oder Ähnlichem an dem Träger zu erleichtern.

Durch diese Ausgestaltung ist es möglich, die Montage und Demontage von Fahrrädern oder Ähnlichem an dem mit der Trägeraufnahme verbundenen Träger zu erleichtern, indem die Gelenkanbindung von einer Verriegelungsposition in eine Anschlagsposition überführbar ist. Dadurch, dass in der Anschlagsposition eine weitere Verdrehung von Trägeraufnahme zu Hauptkörper in einer Richtung blockiert ist, kann sich der mit der Trägeraufnahme verbundene Träger nicht weiter einer Waagerechten und damit dem Boden annähern und ein Fahrrad oder ähnliches kann dem Träger sicher entnommen oder an diesem befestigt werden. In der Anschlagsposition kann die Rotation aber in der anderen Richtung auch nicht blockiert sein, sodass der mit der Trägeraufnahme verbundene Träger sich einer Senkrechten frei annähern kann und damit leicht und ohne weiteren Entriegelungsschritt wieder in eine Verriegelungsposition überführt werden kann.

In einer bevorzugten Ausführungsform greift in der Verriegelungsposition der Verriegelungsbolzen in eine Ausnehmung im Hauptkörper ein. In der einen Anschlagsposition oder den mehreren Anschlagspositionen greift der Verriegelungsbolzen in eine weitere Ausnehmung im Hauptkörper ein. Alternativ oder zusätzlich gelangt die Trägeraufnahme an einem mit dem Hauptkörper verbundenen, vorzugsweise als Endanschlagsbolzen ausgeführten Endanschlag zur Anlage.

Wenn der Endanschlag als Endanschlagsbolzen ausgeführt ist, kann der Hauptkörper eine Öffnung, vorzugsweise zwei sich gegenüberliegende Öffnungen, aufweisen, durch die der Endanschlagsbolzen hindurchgeführt ist, wobei der Endanschlagsbolzen durch einen Splint gegen Entnahme aus der/den Öffnung(en) gesichert sein kann.

Durch diese Ausgestaltung kann, wenn der/die Verriegelungsbolzen durch Federvorspannung nach außen gedrückt wird, der Verriegelungsmechanismus nach einer Überführung in die Verriegelungsposition von sich aus in der Ausnehmung im Hauptkörper einrasten. Auf diese Weise wird die Verriegelung der Gelenkanbindung erleichtert. Wenn im Hauptkörper zusätzlich eine oder mehrere weitere Ausnehmungen vorgesehen sind, in der/denen der/die Verriegelungsbolzen in einer Verriegelungsposition eingreifen, dann kann der Verriegelungsmechanismus auch nach einer Überführung in die Anschlagsposition von sich aus in die weitere(n) Ausnehmung(en) im Hauptkörper eingreifen. Somit wird eine Sicherung erleichtert, die verhindert, dass sich der mit der Trägeraufnahme verbundene Träger dem Boden ungewollt weiter annähert. Alternativ oder zusätzlich kann die Trägeraufnahme in der Anschlagsposition mit einem Endanschlag zur Anlage gelangen, der vorzugsweise als Endanschlagsbolzen ausgeführt ist. Beim Vorsehen eines Endanschlags rastet der Verriegelungsmechanismus, auch wenn der/die Verriegelungsbolzen durch Federkraft nach außen gedrückt wird/werden, mangels entsprechender Ausnehmung im Hauptkörper in der Anschlagsposition nicht von sich aus ein. Somit ist eine Rotation von Trägeraufnahme zu Hauptkörper nur durch den Endanschlag und nur in eine Richtung blockiert, wodurch sich die Trägeraufnahme leichter wieder zurück in eine Verriegelungsposition überführen lässt.

In einer bevorzugten Ausführungsform ist ein Winkel zwischen einer Linie, die parallel zu einer Seitenfläche der Trägeraufnahme verläuft und einer Linie, die senkrecht zu der Anbindung des Hauptkörpers verläuft, in der/den Anschlagsposition(en) größer als in der Verriegelungsposition.

Die Linie, die parallel zu einer Seitenfläche der Trägeraufnahme verläuft, verläuft vorzugsweise auch parallel zu einer Mittelachse des mit der Trägeraufnahme verbundenen Trägers, wenn dieser als gerader Träger ausgebildet ist.

Diese Ausgestaltung bewirkt, dass sich die Trägeraufnahme und der damit verbundene Träger in der Anschlagsposition näher am Boden befinden als in der Verriegelungsposition. Dadurch werden in der Anschlagsposition eine Montage und Demontage von Fahrrädern oder Ähnlichem am Träger erleichtert.

In einer bevorzugten Ausführungsform beträgt in der Verriegelungsposition der obige Winkel 80° oder mehr und 100° oder weniger, vorzugsweise 85° oder mehr und 95° oder weniger. In der/den Anschlagsposition(en) beträgt der obige Winkel 115° oder mehr und 145° oder weniger, vorzugsweise 120° oder mehr und 140° oder weniger, noch bevorzugter 125° oder mehr und 135° oder weniger.

Wenn die Gelenkanbindung beispielsweise mehrere Anschlagspositionen aufweist, kann der obige Winkel in einer ersten Anschlagsposition etwa 120° und in einer zweiten Anschlagsposition etwa 135° betragen, wobei "etwa" eine Abweichung von ± 5° umfasst.

Durch diese Ausgestaltung ist es möglich, die Trägeraufnahme und den damit verbundenen Träger in der Anschlagsposition so weit gegenüber der Verriegelungsposition auszulenken, dass zwischen Träger und Heckklappe eines Fahrzeugs so viel Abstand hergestellt wird, dass die Heckklappe geöffnet werden kann, ohne mit dem Träger zu kollidieren.

In einer bevorzugten Ausführungsform ist die Anbindung für eine Anhängerkupplung als Flanschplatte ausgeführt, die eine oder mehrere Bohrungen aufweist, die vorzugsweise einem standardisierten Lochbild einer Anhängerkupplung entsprechen.

Die Flanschplatte ist eine ebene Platte die mehrere, ein Lochbild ausbildende Bohrungen aufweist. Als Lochbild wird dabei eine Anordnung jener Bohrungen bezeichnet, mit denen ein Kugelkopf bzw. ein Haken einer Anhängerkupplung mit einem Querträger der Anhängerkupplung verschraubt wird.

Durch diese Ausgestaltung der Anbindung kann eine feste und ausreichend sichere Verbindung zwischen Hauptkörper und Anhängerkupplung hergestellt werden, denn die Anzahl und der Durchmesser der Bohrungen des in dem Querträger der Anhängerkupplung ausgebildeten Lochbildes ist bereits für die Lasten von typischen PKW-Anhängern ausgelegt. Folglich ist bei Verwendung entsprechender Schrauben die Anbindung der Flanschplatte für die Abstützung des Fahrradträgers samt Fahrräder ausreichend dimensioniert.

In einer bevorzugten Ausführungsform weist die Gelenkanbindung ferner ein Wechselsystem auf, das an der Anbindung des Hauptkörpers zur Verbindung mit der Anhängerkupplung vorgesehen ist. Das Wechselsystem kann ein konventionelles Wechselsystem oder ein besonderes Wechselsystem sein. Das besondere Wechselsystem weist ein erstes Plattenteil mit zumindest einer Ausnehmung und ein zweites Plattenteil mit zumindest einem Kopfbolzen oder mit zumindest einem Klauenabschnitt auf. Der Kopfbolzen weist einen Kopf und einen Schaft auf. Der Klauenabschnitt ist von dem zweiten Plattenteil beabstandet angeordnet.

Durch diese Ausgestaltung kann die Gelenkanbindung in einfacher Weise und vorzugsweise ohne Werkzeug von einer Anhängerkupplung abgenommen und an diese angebracht werden. Durch die Verwendung des besonderen Wechselsystems kann die Gelenkanbindung besonders einfach an der Anhängerkupplung angebracht und von dieser abgenommen werden, nämlich ohne Teile des Wechselsystems gegeneinander verdrehen zu müssen. Ferner ist das besondere Wechselsystem durch die Verwendung des ersten Plattenteils und des zweiten Plattenteils auch besonders flach, wodurch der Fahrradträger bzw. die Gelenkanbindung im Vergleich zu konventionellen Wechselsystemen weniger weit entfernt vom Fahrzeug befestigt wird.

Gemäß der vorliegenden Erfindung weist ein Fahrradträger die erfindungsgemäße Gelenkanbindung auf, sowie einen Träger, der an seinem einen Ende mit der Trägeraufnahme verbunden oder einstückig mit der Trägeraufnahme ausgebildet ist, zumindest einen Korb, zur Aufnahme eines Laufrades eines Fahrrades, der an einem anderen Ende des Trägers angeordnet ist, und eine Querstrebe, die an dem Träger befestigt ist und sich im Wesentlichen quer zu einer Längsachse des Träger erstreckt.

Der Träger kann mit der Trägeraufnahme verschraubt, vernietet, verschweißt oder auf sonstige Weise lösbar und nichtlösbar verbunden sein, oder der Träger kann einstückig mit der Trägeraufnahme ausgebildet sein, also fließend in die Trägeraufnahme übergehen.

Durch diese Ausgestaltung ist es möglich, einen Fahrradträger vorzusehen, an dem Fahrräder leicht und ergonomisch befestigt werden können, der die Gesamthöhe des Fahrzeugs nicht oder nur geringfügig erhöht, der gute Zugriffsmöglichkeiten auf jedes der montierten Fahrräder bietet und der einen Zugriff auf das Innere des Kofferraums des Fahrzeugs, an dem der Fahrradträger montiert ist, auch dann zulässt, wenn Fahrräder an dem Träger montiert sind.

In einer bevorzugten Ausführungsform sind der Träger und die Querstrebe derart ausgestaltet, dass die Querstrebe an verschiedenen Positionen entlang einer Längsrichtung des Trägers befestigt werden kann, sodass ein Abstand zwischen Korb und Querstrebe einstellbar ist. Alternativ oder zusätzlich weist der Träger vorzugsweise eine Länge von 1,10 m oder mehr und 1,50 m oder weniger, noch bevorzugter eine Länge von 1,10 m oder mehr und 1,30 m oder weniger, oder 1,30 m oder mehr und 1,50 m oder weniger, am bevorzugtesten eine Länge von 1,15 m oder mehr und 1,25 m oder weniger, oder 1,35 m oder mehr und 1,45 m oder weniger auf.

Dadurch, dass die Querstrebe an verschiedenen Positionen entlang einer Längsrichtung des Trägers befestigt werden kann, kann der Träger an verschiedene Fahrradgrößen angepasst werden. Bei eher kleineren oder kürzeren Fahrrädern kann somit die Querstrebe an einer Position befestigt werden, an der sie sich näher an dem Korb befindet und bei größeren oder längeren Fahrrädern kann die Querstrebe an einer Position befestigt werden, an der sie sich weiter von einem Korb entfernt befindet.

Durch die Wahl der Länge des Trägers lässt sich der der Abstand des von der Trägeraufnahme abgewandten Endes des Trägers und des damit verbundenen Korbes zu der Anbindung variieren. Somit ist es möglich, durch Erhöhung der Länge des Trägers das Fahrrad, das mit einem seiner Laufräder in den Korb am Ende des Trägers eingehängt ist, weiter von der Anbindung des Trägers weg und somit auch weiter von dem Fahrzeug weg zu positionieren. Dadurch kann der Platz zum Öffnen der Heckklappe oder der Flügeltüren des Fahrzeugs erhöht werden. Wenn der Träger etwa 1,20 m lang ist, ist zwischen Anbindung und Träger sowie den daran montierten Fahrrädern ausreichend Platz vorhanden, um den Kofferraum des Fahrzeugs, an dem der Fahrradträger montiert ist, zu öffnen. Wenn der Träger etwa 1,40 m lang ist, ist zwischen Anbindung und Träger sowie den daran montierten Fahrrädern ausreichend Platz vorhanden, um die Flügeltüren des Fahrzeugs, an dem der Fahrradträger montiert ist, zu öffnen. Der Begriff "etwa" umfasst hier eine Abweichung von ± 0,05 m umfasst. Gleichzeitig ist bei diesen Längen des Trägers der Korb in der Anschlagsposition nicht zu hoch, sodass ein leichtes Einsetzen und eine leichte Entnahme eines Fahrrades in den Korb möglich ist.

In einer bevorzugten Ausführungsform weist die Querstrebe ferner zumindest ein Paar von Bürsten auf, die mit ihren Borsten einander zugewandt sind und deren Borsten vorzugsweise so angeordnet sind, dass die Borsten der einen Bürste des Paares von Bürsten zu den Borsten der anderen Bürste des Paares von Bürsten gewinkelt angeordnet sind, wobei die Borsten beider Bürsten vorzugsweise in Richtung der Querstrebe weisen. Alternativ oder zusätzlich weist die Querstrebe zumindest eine Klammer auf, die zwei einander zugewandte, vorzugsweise federnd ausgebildete Schenkel zur Aufnahme eines weiteren Laufrades des Fahrrades aufweist. Optional weist die Querstrebe ferner pro Paar von Bürsten und/oder pro Klammer eine Öse zur Durchführung eines über das Pedal eines Fahrrades zu legenden Spanngurtes auf.

"Gewinkelt angeordnet" heißt hierbei, dass die Borsten in einem Winkel zueinander angeordnet sind, der nicht etwa 0° und nicht etwa 180° beträgt, wobei "etwa" eine Abweichung von ± 2° umfasst. Die Borsten innerhalb einer Bürste des Paares von Bürsten sind dabei vorzugsweise im Wesentlich parallel zueinander angeordnet.

Durch die Verwendung eines Paares von Bürsten, deren Borsten gewinkelt zueinander angeordnet sind, kann ein Laufrad des Fahrrades (auch: "weiteres Laufrad"), das nicht das in dem Korb aufgenommene Laufrad ist, aufgenommen werden, und zwar so, dass das Laufrad zwischen den Bürsten aufgenommene Laufrad durch die gewinkelt angeordneten Borsten gegen ein Herausfallen aus den Bürsten gesichert ist. Dadurch ist es möglich, das Laufrad des zu montierenden Fahrrades zwischen den Bürsten zu halten und somit das Fahrrad zur weiteren Montage an dem Träger vorzupositionieren. Dadurch ist für die Montage des Fahrrades an dem Träger nur eine Person notwendig. Durch die vergleichsweise hohe Flexibilität der Borsten ist es zudem möglich, Laufräder mit Reifen sämtlicher marktüblicher Reifen auszunehmen und gegen Herausfallen zu sichern. Dadurch kann der Fahrradträger besonders vielseitig und für verschiedene Arten von Fahrrädern von Rennrädern über Mountainbikes bis Fatbikes verwendet werden.

Durch die Verwendung einer Klammer, die zwei einander zugewandte Schenkel aufweist, kann derselbe Effekt erzielt werden. Das weitere Laufrad kann zwischen den einander zugewandten Schenkeln der Klammer aufgenommen werden, sodass das Laufrad gegen ein Herausfallen aus der Klammer gesichert und das Fahrrad zur weiteren Montage an dem Träger vorpositioniert ist.

Durch das Vorsehen einer Öse pro Paar von Bürsten und/oder pro Klammer kann diese dafür verwendet werden, einen über ein Pedal des zu montierenden Fahrrades gelegten Spanngurt durch die Öse hindurchzuführen und durch Festziehen des Spanngurtes das Fahrrad an dem Träger zu montieren und zu sichern. Diese Art der Befestigung verhindert eine Bewegung der Pedale während der Fahrt und macht eine Klemmung des Rahmens, der möglichweise aus druckempfindlichen Materialien wie kohlefaserverstärkten Kunststoffen bestehen kann, überflüssig.

**In** einer bevorzugten Ausführungsform weist der Fahrradträger ferner eine Gasfeder, vorzugsweise eine Gaszugfeder, auf, die mit dem Hauptkörper und dem Träger verbunden ist. Optional weist der Fahrradträger ferner einen Dämpfer mit einstellbarer Zugstufe und/oder einstellbarer Druckstufe auf, der mit dem Hauptkörper und dem Träger verbunden ist und vorzugsweise parallel zu der Gasfeder angeordnet ist.

Durch diese Ausgestaltung kann die Gasfeder den Benutzer dabei unterstützten, den Träger von der Anschlagsposition wieder in die Verriegelungsposition zu überführen. Die Gewichtskraft des Trägers drückt diesen nach einer Auslenkung aus der Verriegelungsposition in Richtung der Anschlagsposition. Beim Zurückbewegen des Trägers aus der Anschlagsposition in die Verriegelungsposition muss ein Benutzer gegen diese Gewichtskraft arbeiten, wird gemäß der bevorzugten Ausführungsform dabei aber von der Gasfeder unterstützt, indem die Gasfeder eine Kraft auf den Träger ausübt.

Durch das Vorsehen eines Dämpfers mit einstellbarer Zugstufe und/oder einstellbarer Druckstufe kann der Benutzer beim Absenken des Trägers von der Verriegelungsposition in die Anschlagsposition unterstützt werden. Die Gewichtskraft des Trägers drückt diesen nach einer Auslenkung aus der Verriegelungsposition in Richtung der Anschlagsposition. Beim Überführen in die Anschlagsposition muss der Benutzer die Gewichtskraft daher abstützen, damit der Träger nicht ungebremst auf die Endanschläge der Anschlagsposition trifft. Der Dämpfer unterstützt den Benutzer nun in dem Abstützen durch das Aufbringen einer Dämpfkraft oder übernimmt das Abstützen sogar vollständig. Die Einstellbarkeit der Zugstufe oder Druckstufe erlaubt dabei eine Anpassung der durch den Dämpfer aufgebrachten Dämpfkraft je nach Anzahl der am Träger befestigten Fahrräder und deren Gewicht.

In einer bevorzugten Ausführungsform weist der Fahrradträger ferner eine Oberstrebe auf, die an einem von der Trägeraufnahme abgewandten Ende des Trägers befestigt ist und sich im Wesentlichen quer zur Längsachse des Trägers erstreckt. Der zumindest eine Korb ist an der Oberstrebe befestigt und weist eine Öffnung zum Einsetzen eines Laufrades eines Fahrrades auf. Die Öffnung weist in einer Draufsicht auf die Öffnung einen Winkel zu der Oberstrebe von 75° oder mehr und weniger als 90°, vorzugsweise von 78° oder mehr und 85° oder weniger, noch bevorzugter von 81° auf.

Als Winkel zwischen Öffnung des Korbes und Oberstrebe kann ein Winkel zwischen der Längsachse der Querstrebe und der Längssymmetrieachse der Öffnung verstanden werden.

Durch diese Ausführungsform ist es möglich, ein Fahrrad derart an dem Träger zu montieren, dass es einen gewissen Lenkeinschlag aufweist, das gelenkte Laufrad also zum Rahmen des Fahrrades einen Winkel aufweist. Dadurch kann, insbesondere bei Fahrrädern mit sehr breiten Lenkern, der nach links und rechts durch den Lenker eingenommene Platz reduziert werden und die Anzahl der an dem Träger montierbaren Fahrräder kann erhöht und/oder die Gesamtbreite des Fahrradträgers und der daran montierten Fahrräder kann verringert werden.

### KURZE BESCHREIBUNG DER ZEICHNUNGEN

Weitere Merkmale und Vorteile der vorliegenden Erfindung ergeben sich aus der nachfolgenden Beschreibung von Ausführungsformen unter Bezugnahme auf die beiliegenden Zeichnungen.
Fig. 1 ist eine Seitenansicht der Verriegelungsposition eines Fahrradträgers gemäß einer Ausführungsform der vorliegenden Erfindung mit einer Gelenkanbindung gemäß einer Ausführungsform der vorliegenden Erfindung.
Fig. 2 ist eine perspektivische Ansicht eines Fahrradträgers gemäß einer Ausführungsform der vorliegenden Erfindung in einer Verriegelungsposition mit einer Gelenkanbindung gemäß einer Ausführungsform der vorliegenden Erfindung.
Fig. 3 ist eine perspektivische Explosionsansicht einer Gelenkanbindung gemäß einer Ausführungsform des vorliegenden Erfindung.
Fig. 4a ist eine geschnittene Seitenansicht einer Gelenkanbindung gemäß einer Ausführungsform der vorliegenden Erfindung die einen Zustand zeigt, in dem sich der Verriegelungsmechanismus in einer verriegelten Position befindet.
Fig. 4b ist eine geschnittene Seitenansicht einer Gelenkanbindung gemäß einer Ausführungsform der vorliegenden Erfindung, die einen Zustand zeigt, in dem sich der Verriegelungsmechanismus in einer entriegelten Position befindet.
Fig. 5a ist eine Schnittansicht einer Gelenkanbindung gemäß einer Ausführungsform der vorliegenden Erfindung von der Seite der Anbindung aus gesehen, die einen Zustand zeigt, in dem sich der Verriegelungsmechanismus in einer verriegelten Position befindet.
Fig. 5b ist eine Schnittansicht einer Gelenkanbindung gemäß einer Ausführungsform der vorliegenden Erfindung von der Seite der Anbindung aus gesehen, die einen Zustand zeigt, in dem sich der Verriegelungsmechanismus in einer entriegelten Position befindet.
Fig. 6a ist eine geschnittene Seitenansicht einer Gelenkanbindung gemäß einer Ausführungsform der vorliegenden Erfindung, die einen Zustand zeigt, in dem sich die Trägeraufnahme und der damit verbundene Träger in einer ersten Anschlagsposition befinden, in der die Trägeraufnahme mit einem Endanschlagsbolzen in Anlage gelangt.
Fig. 6b ist eine geschnittene Seitenansicht einer Gelenkanbindung gemäß einer Ausführungsform der vorliegenden Erfindung, die einen Zustand zeigt, in dem sich die Trägeraufnahme und der damit verbundene Träger in einer zweiten Anschlagsposition befinden, in der die Trägeraufnahme mit einem Endanschlagsbolzen in Anlage gelangt.
Fig. 7a ist eine perspektivische Ansicht einer an einem Verriegelungsmechanismus angeordneten Tritthebelsicherung, die sich in einer gesicherten Position befindet, gemäß einer Ausführungsform der vorliegenden Erfindung.
Fig. 7b ist eine geschnittene Seitenansicht einer an einem Verriegelungsmechanismus angeordneten Tritthebelsicherung, die sich in einer gesicherten Position befindet, gemäß einer Ausführungsform der vorliegenden Erfindung.
Fig. 8a ist eine perspektivische Ansicht einer Querstrebe eines Fahrradträgers gemäß einer Ausführungsform der vorliegenden Erfindung und vier damit verbundenen Klammern und Ösen.
Fig. 8b ist eine Draufsicht auf eine Querstrebe eines Fahrradträgers gemäß einer Ausführungsform der vorliegenden Erfindung und vier damit verbundenen Klammern und Ösen.
Fig. 9 ist eine Seitenansicht der Verriegelungsposition eines Fahrradträgers mit daran montiertem Fahrrad gemäß einer Ausführungsform der vorliegenden Erfindung mit einer Gelenkanbindung gemäß einer Ausführungsform der vorliegenden Erfindung.
Fig. 10 ist eine Seitenansicht der Anschlagsposition eines Fahrradträgers mit daran montiertem Fahrrad gemäß einer Ausführungsform der vorliegenden Erfindung mit einer Gelenkanbindung gemäß einer Ausführungsform der vorliegenden Erfindung.
Fig. 11 ist eine Explosionsansicht einer ersten Ausführungsform eines besonderen Wechselsystems, das zwischen der Gelenkanbindung und der Anhängerkupplung zu deren Verbindung miteinander angeordnet werden kann.
Fig. 12a ist eine Explosionsansicht einer zweiten Ausführungsform eines besonderen Wechselssystems, das zwischen der Gelenkanbindung und der Anhängerkupplung zu deren Verbindung miteinander angeordnet werden kann.
Fig. 12b ist eine Vorderansicht der zweiten Ausführungsform des besonderen Wechselsystems aus Fig. 12a, das einen geschlossenen Zustand desselben zeigt.
Fig. 12c ist eine Rückansicht der zweiten Ausführungsform des besonderen Wechselsystems auf Fig. 12a, das einen geschlossenen Zustand desselben zeigt.

### DETAILLIERTE BESCHREIBUNG VON AUSFÜHRUNGSFORMEN

Gleiche Bezugszeichen, die in unterschiedlichen Figuren aufgeführt sind, benennen identische, einander entsprechende, oder funktionell ähnliche Elemente. Aus Gründen der besseren Erkennbarkeit von Details in Zeichnungen, können einzelne Bezugszeichen, die in einer Figur bereits eingezeichnet wurden, in einer anderen Figur ausgelassen sein.

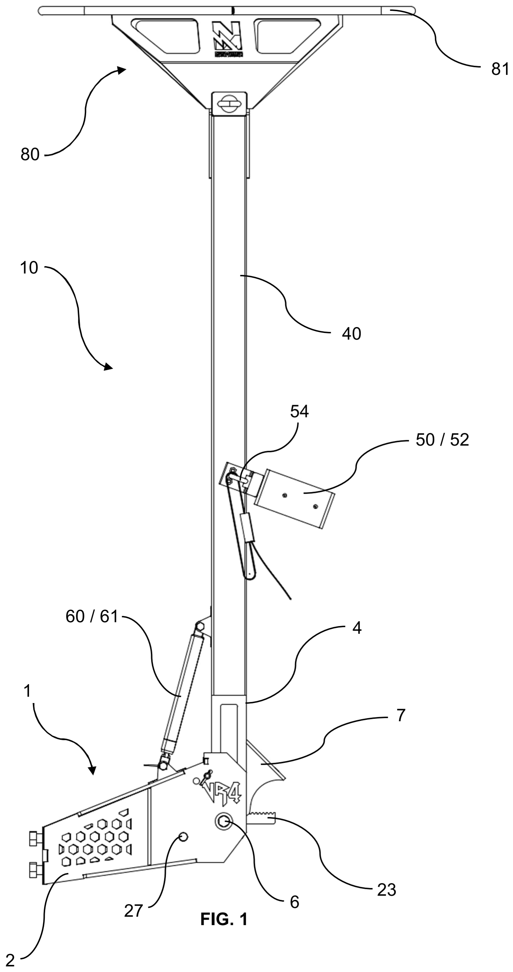

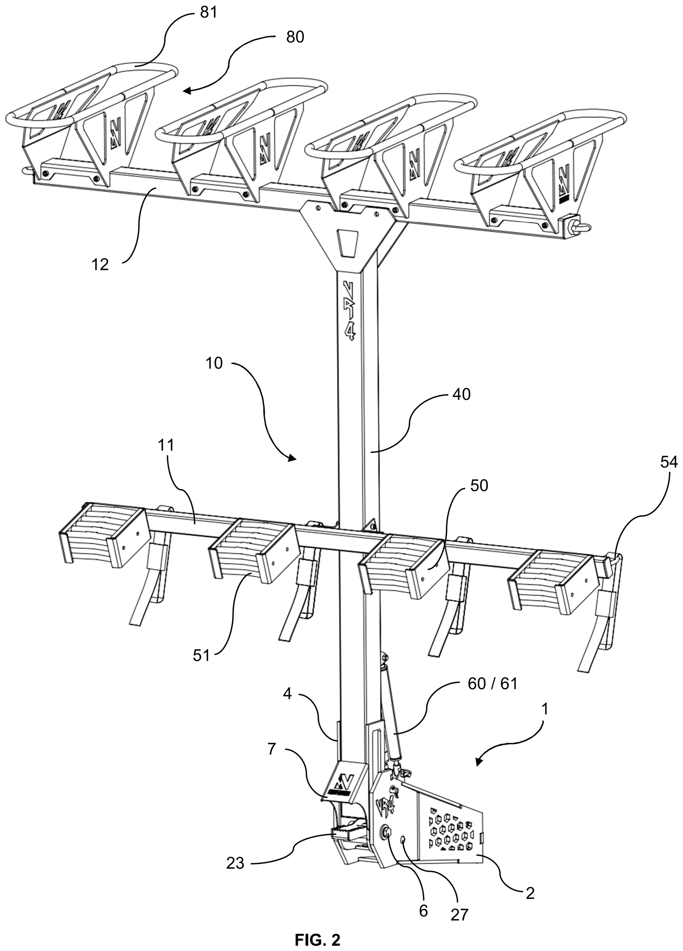

Eine bevorzugte Ausführungsform eines Fahrradträgers 10 gemäß der vorliegenden Erfindung mit einer Gelenkanbindung gemäß der vorliegenden Erfindung ist in Fig. 1 und Fig. 2 dargestellt. Die Gelenkanbindung 1 weist einen Hauptkörper 2 mit einer Anbindung 30 für eine Anhängerkupplung 300, eine Trägeraufnahme 4 zur Aufnahme eines Trägers 40, eine Achse 6 zur drehbaren Lagerung von Hauptkörper 2 und Trägeraufnahme 4 und einen Verriegelungsmechanismus 20 auf, der zur Blockierung und Freigabe einer Rotation von Trägeraufnahme 4 und Hauptkörper 2 relativ zueinander um die Achse 6 dient.

Bei dem Fahrradträger 10 ist die Trägeraufnahme 4 mit dem Träger 40 verbunden. Dazu kann die Trägeraufnahme 4 mit dem Träger 40 verschweißt, verschraubt, vernietet oder auf sonstige Weise lösbar und nicht lösbar verbunden sein. Alternativ können Trägeraufnahme 4 und Träger 40 auch einstückig ausgebildet sein. Das heißt, der Träger 40 kann an seinem einen Ende in die Trägeraufnahme 4 übergehen. Der Träger 40 kann mit einem rechteckigen, vorzugsweise quadratischen Querschnitt ausgebildet sein.

An dem anderen Ende des Trägers 40 kann eine Oberstrebe 12 vorgesehen sein, die einen oder mehrere, vorzugsweise vier, Körbe 80 aufweist. Der Korb 80 ist dabei ausgestaltet, um ein Laufrad eines an dem Träger 40 zu montierenden Fahrrades aufnehmen kann. Dazu hat der Korb 80 eine Öffnung 81, die in der dargestellten bevorzugten Ausführungsform als umlaufender Rahmen ausgestaltet ist. Die Öffnung 81 hat vorzugsweise die Form eines symmetrischen Ovals, um der Kontur eines Querschnitts eines Laufrades zu entsprechen.

Der Träger 40 kann, wie in Fig. 1 und Fig. 2 dargestellt, entlang seiner Erstreckungsrichtung eine Querstrebe 11 aufweisen. Querstrebe und Träger 40 sind vorzugsweise so ausgestaltet, dass die Querstrebe an verschiedenen Positionen entlang einer Längsrichtung des Trägers 40 befestigt werden kann, sodass ein Abstand zwischen Korb 80 und Querstrebe eingestellt werden kann. Dazu kann der Träger 40 etwa eine Vielzahl von zueinander beabstandeten Gewindebohrungen aufweisen, und die Querstrebe kann mit Gewindeschrauben an verschiedene Gewindebohrungen der Vielzahl von Gewindebohrungen befestigt werden. Alternativ dazu kann der Träger 40 etwa eine Vielzahl von zueinander beabstandeten Bohrungen aufweisen und die Querstrebe kann mit einem durch einen Stift an einer der Vielzahl von Bohrungen befestigt werden, wobei der Stift zur Sicherung vorzugsweise einen Splint aufweist.

Die Querstrebe kann Elemente 50, 53 zum Halten eines Laufrades eines zu befestigenden Fahrrades aufweisen, das nicht das Laufrad ist, das in dem Korb 80 aufgenommen werden soll. Derartige Elemente können beispielsweise ein Paar von Bürsten 50 sein, die mit ihren Borsten 51 einander zugewandt sind und deren Borsten 51 vorzugsweise so angeordnet sind, dass die Borsten 51 der einen Bürste des Paares von Bürsten 50 zu den Borsten 51 der anderen Bürste des Paares von Bürsten 50 gewinkelt angeordnet sind, wobei die Borsten 51 beider Bürsten vorzugsweise in Richtung der Querstrebe weisen. Alternativ können derartige Elemente auch Klammern 52 sein, die je zwei einander zugewandte, vorzugsweise federnd ausgebildete Schenkel 53 zur Aufnahme eines weiteren Laufrades des Fahrrades aufweisen. Diese Klammern 52 werden weiter unten näher beschrieben. Diese Elemente dienen einer Vorpositionierung des Fahrrades an dem Träger, sodass eine weitere Befestigung etwa mit Hilfe eines Spanngurtes oder ähnlichem erleichtert wird, und zwar auch in einer Position, in welcher der Träger 40 nicht im Wesentlichen senkrecht ausgerichtet ist (Verriegelungsposition), sondern in einer Position, in welcher der Träger 40 gegenüber einer Senkrechten um 30° bis 45° zu einer von dem Fahrzeug abgewandten Seite ausgelenkt ist (Anschlagsposition). Ohne diese Elemente würde in dieser Position das zu befestigende Fahrrad, das mit seinem einen Laufrad bereits im Korb 80 am oberen Ende des Trägers 40 aufgenommen ist, senkrecht nach unten Hängen, dabei aber von dem restlichen Träger 40 entfernt sein. Wird nun das zweite Laufrad durch das Element, also durch das Paar von Bürsten 50, durch die Klammer 52 oder ein ähnliches Element gehalten, befindet sich das Fahrrad näher an dem Träger 40 und eine weitere Befestigung des Fahrrades an dem Träger 40 etwa mittels eines Spanngurtes wird erleichtert.

Das an der Querstrebe angebrachte Element zum Halten eines Laufrades, also das Paar von Bürsten 50, die Klammer 52 oder Ähnliches, kann zu dem an der Oberstrebe 12 angebrachten Korb 80 in Längsrichtung der Querstrebe und der Oberstrebe 12 so zueinander versetzt sein, dass der Rahmen, insbesondere das Ober- und Unterrohr, eines zu befestigenden Fahrrades im Wesentlichen senkrecht ausgerichtet ist, wenn ein erstes Laufrad des Fahrrades in den Korb 80 und ein zweites Laufrad des Fahrrades in das Element zum Halten eines Laufrades eingesetzt ist. Anders ausgedrückt können, damit der Rahmen, insbesondere das Ober- und Unterrohr, eines zu befestigenden Fahrrades im montierten Zustand im Wesentlichen senkrecht ausgerichtet ist, die Mitte des Elements zum Halten eines Laufrades einen Abstand zum Träger 40 aufweisen, der sich von dem Abstand der Mitte der Öffnung 81 des Korbes 80 zum Träger 40 unterscheidet.

Die Querstrebe kann ferner pro Element zum Halten eines Laufrades, also pro Paar von Bürsten 50, pro Klammer 52 oder pro ähnlichem Element, eine Öse 54 aufweisen. Die Öse 54 dient der weiteren Befestigung des Fahrrades an dem Träger. So kann etwa ein Spanngurt über ein Pedal des zu befestigenden Fahrrades gelegt, durch die Öse 54 geführt und anschließend festgezogen werden.

**In** einer bevorzugten Ausführungsform kann, wie in Fig. 1 und Fig. 2 dargestellt, eine Gasfeder 60 vorgesehen sein, die mit dem Träger 40 oder mit der Trägeraufnahme 4 und mit dem Hauptkörper 2 der Gelenkanbindung 1 verbunden ist. Dabei ist zumindest eine Anbindung der Gasfeder 60 lösbar, beispielsweise mit einem Stift 62, der durch einen Split gesichert sein kann, ausgeführt. Die Gasfeder 60 dient dazu, eine Kraft zwischen Hauptkörper 2 und Trägeraufnahme 4 bzw. Träger 40 auszuüben. Durch die Gewichtskraft des Trägers 40 wird dieser bei einer Auslenkung aus der Verriegelungsposition in Richtung der Anschlagsposition gedrückt. Beim Zurückbewegen des Trägers 40 aus der Anschlagsposition in die Verriegelungsposition muss ein Benutzer somit gegen diese Gewichtskraft arbeiten. Durch das Vorsehen einer Gasfeder 60 kann der Benutzer beim Zurückbewegen des Trägers 40 in die Verriegelungsposition unterstützt werden. Dazu wird die Gasfeder 60 so vorgesehen, dass sie eine Kraft aufbringt, welche den Träger 40 oder die Trägeraufnahme 4 in die Verriegelungsposition vorspannt und somit bei Auslenkung des Trägers 40 in die Anschlagsposition den Träger 40 in Richtung der Verriegelungsposition drückt oder zieht. Wenn die Gasfeder 60, wie in Fig. 1 und Fig. 2 dargestellt, auf einer Innenwinkelseite zwischen Träger 40 bzw. Trägeraufnahme 4 und Hauptkörper 2 vorgesehen ist, wird die Gasfeder 60 als Gaszugfeder ausgeführt. Es ist aber auch denkbar, die Gasfeder als Gasdruckfeder auszuführen, solange diese den Träger 40 bzw. die Trägeraufnahme 4 in die Verriegelungsposition vorspannt. Dazu kann die Gasdruckfeder beispielsweise an der Unterseite des Hauptkörpers 2 vorgesehen sein und die Druckkraft über ein Umlenkelement wie ein bogenförmiges, mit der dem Fahrzeug abgewandten Seite des Trägers 40 bzw. der Trägeraufnahme 4 verbundenes Bauteil auf die dem Fahrzeug abgewandte Seite des Trägers 40 bzw. der Trägeraufnahme 4 übertragen. Die Federkraft der Gasfeder 60 ist dabei vorzugsweise zu bemessen, dass die Gasfeder 60 den Benutzer zwar beim Zurückbewegen des Trägers 40 aus der Anschlagsposition in die Verriegelungsposition unterstützt, sie aber den Benutzer nicht dazu zwingt, beim Absenken des Trägers 40 aus der Verriegelungsposition in die Anschlagsposition eine zusätzliche Kraft aufbringen zu müssen. Anders ausgedrückt ist die Federkraft daher kleiner als die Gewichtskraft des Trägers 40 bzw. des Anteils der Gewichtskraft des Trägers 40, der in Richtung der Gasfeder 60 wirkt. Das bedeutet, dass der Benutzer beim Zurückbewegen des Trägers 40 aus der Anschlagsposition in die Verriegelungsposition noch immer eine gewisse Kraft aufbringen muss, die jedoch durch die Gasfeder 60 reduziert werden kann.

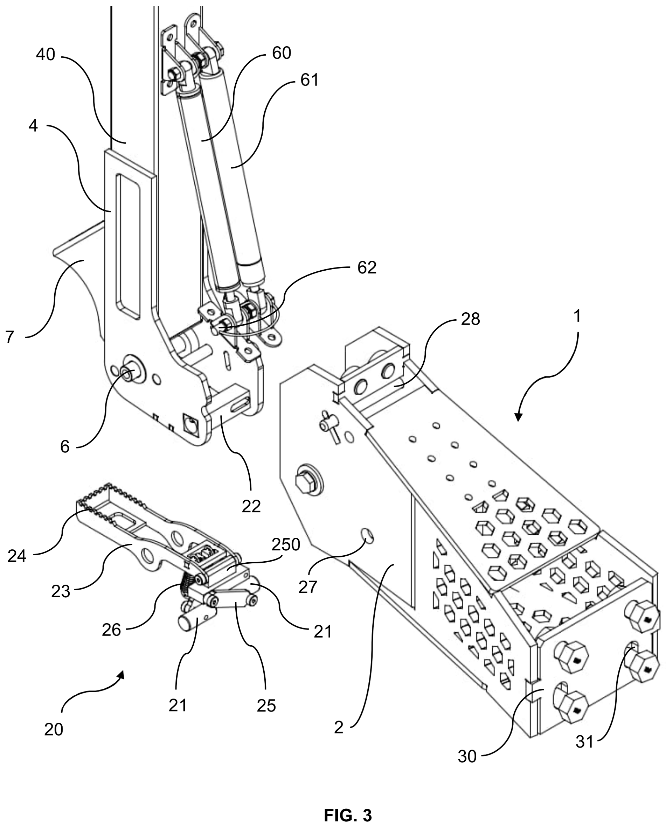

Eine bevorzugte Ausführungsform der Gelenkanbindung 1 ist in Fig. 3 in einer Explosionsdarstellung gezeigt. Wie darin dargestellt ist, kann zusätzlich zu der Gasfeder 60 ein Dämpfer 61 vorgesehen sein, der vorzugsweise parallel zu der Gasfeder 60 angeordnet ist und den Hauptkörper 2 mit der Trägeraufnahme 4 bzw. dem Träger 40 verbindet. Der Dämpfer 61 dient dazu, eine Kraft zwischen Hauptkörper 2 und Träger 40 bzw. Trägeraufnahme 4 auszuüben. Die Gewichtskraft des Trägers 40 drückt diesen nach einer Auslenkung aus der Verriegelungsposition in Richtung der Anschlagsposition. Beim Absenken des Trägers 40 aus der Verriegelungsposition in die Anschlagsposition muss der Benutzer daher die Gewichtskraft des Trägers 40 und eventuell daran montierter Fahrräder abstützen, damit der Träger 40 nicht ungebremst auf die Endanschläge der Anschlagsposition, etwa auf die Endanschlagsbolzen 28, trifft. Wenn der Dämpfer 61, wie in Fig. 3 dargestellt, auf einer Innenwinkelseite zwischen dem Hauptkörper 2 und dem Träger 40 bzw. der Trägeraufnahme 4 angeordnet ist, wird beim Absenken des Trägers 40 aus der Verriegelungsposition in die Anschlagsposition die Kolbenstange des Dämpfers 61 ausgefahren. Dann ist der Dämpfer 61 so ausgestaltet, dass er beim Ausfahren der Kolbenstange eine der Bewegungsrichtung entgegengesetzte Dämpfkraft ausübt und daher die durch die Gewichtskraft des Trägers 40 hervorgerufene Abwärtsbewegung des Trägers 40 in Richtung der Anschlagsposition abbremst. Das Zurückbewegen des Trägers 40 aus der Anschlagsposition in die Verriegelungsposition soll durch den Dämpfer 61 jedoch vorzugsweise nicht erschwert werden. Daher ist der Dämpfer 61 in diesem Falle vorzugsweise so ausgebildet, dass er beim Einfahren der Kolbenstange im Wesentlichen keine Dämpfkraft aufbringt, seine Druckstufe also nahe null ist. Wenn der Dämpfer 61 eine einstellbare Zugstufe aufweist, ist die beim Ausfahren der Kolbenstange aufgebrachte Dämpfkraft einstellbar. Dadurch kann die Bremswirkung des Dämpfers 61 beim Absenken des Trägers 40 dessen Gewichtskraft, also an die Anzahl der daran befestigten Fahrräder angepasst werden. Je mehr Fahrräder an dem Träger 40 befestigt sind, desto höher ist die Gewichtskraft des Trägers 40 und desto mehr Dämpfkraft muss der Dämpfer 61 aufbringen um die durch diese Gewichtskraft hervorgerufene Abwärtsbewegung zu bremsen.

Wenn der Dämpfer 61 nicht wie in Fig. 3 dargestellt auf der Innenwinkelseite zwischen Hauptkörper 2 und Träger 40 bzw. Trägeraufnahme 4 angebracht ist, sondern etwa auf einer Unterseite des Hauptkörpers 2 angebracht und über ein Umlenkelement mit der dem Fahrzeug abgewandten Seite des Trägers 40 bzw. der Trägeraufnahme 4 verbunden ist, dann wird die Kolbenstange des Dämpfers 61 beim Absenken des Trägers 40 aus der Verriegelungsposition in die Anschlagsposition eingefahren. In diesem Fall ist der Dämpfer 61 so ausgestaltet, dass er beim Einfahren der Kolbenstange eine der Bewegungsrichtung entgegengesetzte Dämpfkraft ausübt und daher die durch die Gewichtskraft des Trägers 40 hervorgerufene Abwärtsbewegung des Trägers 40 in Richtung der Anschlagsposition abbremst. In analoger Weise ist der Dämpfer 61 in diesem Falle vorzugsweise so ausgebildet, dass er beim Ausfahren der Kolbenstange im Wesentlichen keine Dämpfkraft aufbringt, seine Zugstufe also nahe null ist. Wenn der Dämpfer 61 eine einstellbare Druckstufe aufweist, ist die beim Einfahren der Kolbenstange aufgebrachte Dämpfkraft einstellbar. Dadurch kann bei dieser Anordnung des Dämpfers 61 die Bremswirkung des Dämpfers 61 beim Absenken des Trägers 40 dessen Gewichtskraft, also an die Anzahl der daran befestigten Fahrräder angepasst werden.

Die Anbindung 30 an die Anhängerkupplung 300 eines Fahrzeugs kann, wie in Fig. 3 dargestellt, als Flanschplatte ausgeführt sein. Eine solche Flanschplatte weist eine Anordnung von Bohrungen 31 auf, von denen eine oder mehrere auch als Langlöcher ausgebildet sein können, die auch als Lochbild bezeichnet werden und die vorzugsweise einer Anordnung von Bohrungen entsprechen, die in der Anhängerkupplung 300 des Fahrzeugs vorgesehen wird. Durch entsprechende Schrauben und Muttern werden die Flanschplatte 30 und die Anhängerkupplung 300 miteinander verschraubt. Sowohl das Lochbild als auch die zu verwendenden Schrauben und Muttern sind standardisiert und können sich abhängig vom Fahrzeughersteller und Zulassungsort des Fahrzeugs unterscheiden. Die Ausbildung der Anbindung 30 als Flanschplatte hat den Vorteil, dass die standardisierte Schraubverbindung zwischen Flanschplatte 30 und Anhängerkupplung 300, mit welcher sonst der Kugelkopf bzw. der Haken der Anhängerkupplung mit der Anhängerkupplung 300 verbunden wird, bereits für die hohen Lasten eines Anhängers ausgelegt und somit für den Fahrradträger 10 ausreichend dimensioniert sind.

Alternativ dazu kann die Anbindung 30 auch als Kupplung für einen Kugelkopf einer Anhängerkupplung ausgebildet sein. Das trifft insbesondere dann zu, wenn es sich um eine besonders leichte Ausführung der Gelenkanbindung 1 und/oder des Fahrradträgers 10, etwa aus Leichtbaumaterialien wie Aluminium oder Glas- oder Kohlefaserverstärktem Kunststoff und/oder mit besonders dünnen Wandstärken handelt. Eine solche Ausführungsform kann für den Transport insbesondere von leichten Rennrädern bevorzugt sein.

Als nächstes wird Verriegelungsmechanismus 20 der Gelenkanbindung 1 gemäß einer bevorzugten Ausführungsform beschrieben. Wie in Fig. 3 dargestellt, weist der Verriegelungsmechanismus 20 zumindest einen, bevorzugt jedoch zwei Verriegelungsbolzen 21 21 auf. Während der Verriegelungsmechanismus 20 im Nachfolgenden anhand zweier Verriegelungsbolzen 21 beschrieben wird, ist zu verstehen, dass die erfinderische Ausgestaltung desselben auch mit nur einem Verriegelungsbolzen 21 möglich ist. Die nachfolgend beschrieben Eigenschaften, die sich auf die beiden Verriegelungsbolzen 21 beziehen, treffen daher in analogerweise auch auf einen einzelnen Verriegelungsbolzen 21 zu. Die Verriegelungsbolzen 21 sind in eine Verriegelungsrichtung verschiebbar angeordnet. Die Verriegelungsrichtung ist dabei parallel zu der Richtung in die sich die Achse 6, um die der Hauptkörper 2 und die Trägeraufnahme 4 relativ zueinander drehbar sind, erstreckt. Die Verriegelungsbolzen 21 können in einer Hülse 22 in ihrer Axialrichtung verschiebbar angeordnet sein. Die Hülse 22 weist dazu in ihrem Inneren eine Kontur auf, die im Wesentlichen einer äußeren Kontur der Verriegelungsbolzen 21 entspricht. Die Verriegelungsbolzen 21 sind vorzugsweise mit einer runden Kontur, also als Zylinderstifte ausgebildet. Dementsprechend weist die Hülse 22 in Ihrem Inneren eine runde Bohrung auf. Die Verriegelungsbolzen 21 können jedoch auch eine rechteckige Kontur aufweisen, also als Mehrkantstäbe ausgebildet sein. In diesem Fall weist die Hülse 22 eine Durchgangsöffnung mit rechteckigem Querschnitt auf. Die Hülse 22 ist mit der Trägeraufnahme 4 verbunden, vorzugsweise nicht lösbar verbunden, beispielsweise verschweißt. Die Hülse 22 kann eine seitliche Öffnung aufweisen.

Der Verriegelungsmechanismus 20 weist ferner einen Tritthebel 23 auf, der um eine Achse drehbar gelagert ist, die vorzugsweise aber nicht notwendigerweise dieselbe Achse 6 ist, um welche der Hauptkörper 2 und die Trägeraufnahme 4 relativ zueinander drehbar angeordnet sind. Der Tritthebel 23 ist dabei so angeordnet, dass er von dem Hauptkörper 2 und der Trägeraufnahme 4 hervorsteht und von einem Benutzer mit dem Fuß bedient werden kann.

Der Verriegelungsmechanismus 20 weist ferner pro Verriegelungsbolzen 21 ein Koppelelement 25 auf, das mit dem Tritthebel 23 und dem Verriegelungsbolzen 21 jeweils gelenkig verbunden ist. Dabei kann das Koppelelement 25 mit dem Tritthebel 23 und dem Verriegelungsbolzen 21 entweder direkt verbunden sein, oder das Koppelelement 25 kann mit einem weiteren Element 250 verbunden sein, das seinerseits mit dem Tritthebel 23 oder dem Verriegelungsbolzen 21 verbunden ist. Ein solches weiteres Element 250 ist in Fig. 3 zwischen dem Koppelelement 25 und dem Tritthebel 23 angeordnet dargestellt. Das Koppelelement 25 kann mit dem Verriegelungsbolzen 21 durch die seitliche Öffnung in der Hülse 22 verbunden sein. Durch das Koppelelement 25 und die Hülse 22 wird bei einer Betätigung des Tritthebels 23 ein vertikaler Anteil der Drehbewegung des Tritthebels 23 in eine horizontale Bewegung des Verriegelungsbolzens 21 übersetzt. Dadurch kann der Verriegelungsbolzen 21 aus einer verriegelten Position in eine entriegelte Position überführt werden und umgekehrt. Das weitere Element 250 sorgt dafür, den horizontalen Anteil der Drehbewegung des Tritthebels 23 auszugleichen bzw. zu übertragen, während das Koppelement den vertikalen Anteil der Drehbewegung des Tritthebels 23 ausgleicht bzw. überträgt. Da der horizontale Anteil der Drehbewegung des Tritthebels 23 jedoch bei kleinen Verdrehwinkeln des Tritthebels 23 sehr gering sein kann, kann das weitere Element 250 auch weggelassen und stattdessen etwa genügend Spiel in der direkten Verbindung zwischen Koppelelement 25 und Verriegelungsbolzen 21 bzw. Tritthebel 23 vorgesehen werden.

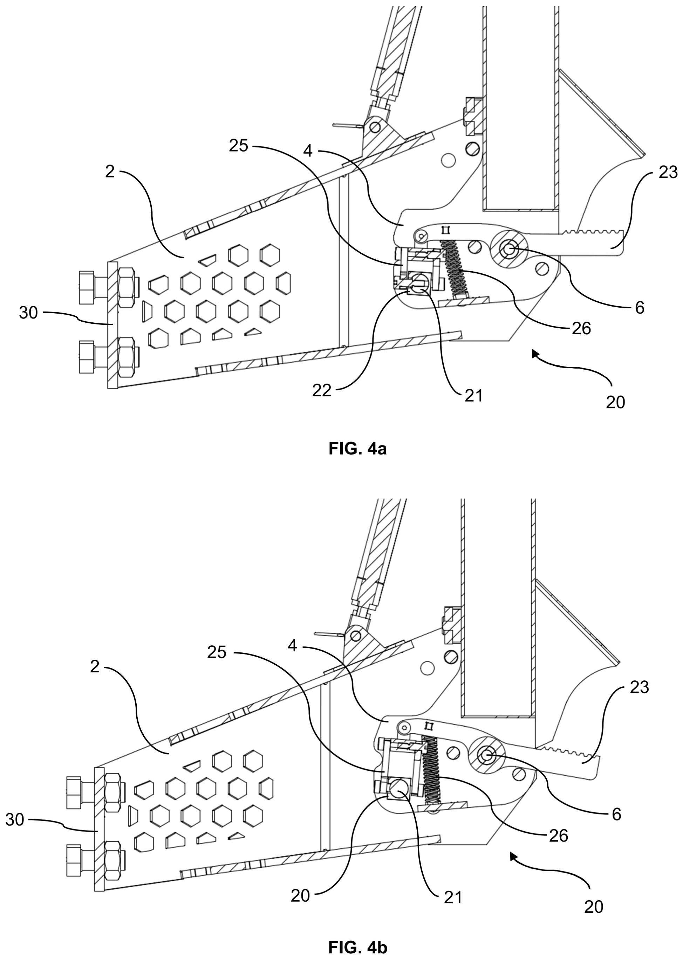

In Fig. 4a ist der Verriegelungsmechanismus 20 einer Gelenkanbindung 1 gemäß einer bevorzugten Ausführungsform in einer verriegelten Position dargestellt, während Fig. 4b die entriegelte Position desselben zeigt. Um die Verriegelungsbolzen 21 in einer Verriegelungsrichtung nach außen vorzuspannen, kann eine Feder 26 vorgesehen sein. Diese kann, wie in Fig. 4a und Fig. 4b dargestellt, zwischen Tritthebel 23 und Trägeraufnahme 4 angeordnet und als Zugfeder ausgeführt sein. Die Feder 26 ist dabei so angeordnet, dass die zwischen Trägeraufnahme 4 und Tritthebel 23 wirkende Federkraft den Tritthebel 23 in eine verriegelte Position vorspannt. Aus der in Fig. 4b dargestellten entriegelten Position wird der Tritthebel 23 durch die Federkraft nach unten in Richtung des mit der Zugfeder verbundenen Abschnitts der Trägeraufnahme 4 gezogen. Die in Fig. 4b nach unten wirkende Kraft wird über das Koppelelement 25 auf den Verriegelungsbolzen 21 übertragen und drückt den Verriegelungsbolzen 21 wegen der durch die Hülse 22 nach unten hin eingeschränkte Bewegungsfreiheit nach außen. In dem in Fig. 4b dargestellten entriegelten Zustand drückt eine nach außen weisende Stirnseite des Verriegelungsbolzen 21 gegen eine Innenwand des Hauptkörpers 2 und kann sich nicht weiter nach außen bewegen, wodurch die Zugfeder gespannt bleibt. In dem in Fig. 4a dargestellten verriegelten Zustand liegt der nach außen weisenden Stirnseite des Verriegelungsbolzens 21 nun nicht mehr die Innenwand des Hauptkörpers 2, sondern eine Ausnehmung 27 in der Innenwand des Hauptkörpers 2 gegenüber, die als Durchgangsöffnung ausgebildet sein kann, sodass der Verriegelungsbolzen 21 sich nach außen bewegen und in die Ausnehmung 27 hineintreten kann, wodurch die Zugfeder entspannt wird.

Die zuvor beschriebene Vorspannung der Verriegelungsbolzen 21 muss jedoch nicht notwendigerweise durch eine zwischen dem Tritthebel 23 und der Trägeraufnahme 4 angeordnete Zugfeder realisiert werden. So könnte etwa eine Druckfeder zwischen Tritthebel 23 und Trägeraufnahme 4 angeordnet sein, die in Fig. 4a und Fig. 4b von einer oberen Seite der Trägeraufnahme 4 aus den Tritthebel 23 in eine verriegelte Position drückt. Alternativ dazu könnte eine Feder auch nicht zwischen Tritthebel 23 und Trägeraufnahme 4 angeordnet werden, sondern es könnte eine Feder direkt zwischen den beiden nach innen weisenden Stirnseiten der Verriegelungsbolzen 21 angeordnet werden, welche die beiden Verriegelungsbolzen 21 somit nach in einer Verriegelungsrichtung außen vorspannt. Während eine Anordnung einer Feder 26 zwischen Tritthebel 23 und Trägeraufnahme 4 einen leichten Zugriff auf die Feder 26 zu Wartungs- oder Reparaturzwecken ermöglicht, ist eine zwischen den nach innen weisenden Stirnseiten der Verriegelungsbolzen 21 angeordnete Feder durch die Hülse 22 besser vor Umwelteinflüssen, wie Nässe oder Schmutz geschützt, wodurch die Lebensdauer der Feder erhöht werden kann.

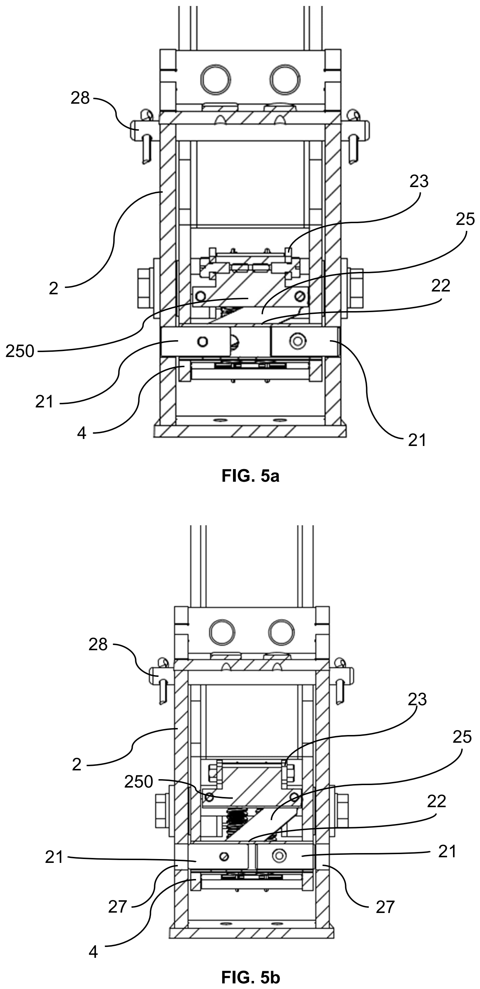

**In** Fig. 5a und Fig. 5b ist der Verriegelungsmechanismus 20 in einer Schnittansicht des Hauptkörpers 2 dargestellt, von der Seite der Anbindung 30 für eine Anhängerkupplung 300 aus gesehen. Wie in Fig. 5a dargestellt, greifen in der verriegelten Position die Verriegelungsbolzen 21 in die Ausnehmung 27 in dem Hauptkörper 2 ein und blockieren somit eine Relativbewegung zwischen Hauptkörper 2 und Trägeraufnahme 4. Wie in Fig. 5b dargestellt, ist der Tritthebel 23 in der entriegelten Position verdreht, wodurch das weitere Element 250 und das Koppelelement 25 nach oben bewegt werden und die Verriegelungsbolzen 21 wegen der durch die Hülse 22 nach oben hin eingeschränkte Bewegungsfreiheit nach innen gezogen werden. Damit greifen die Verriegelungsbolzen 21 nicht mehr in die Ausnehmung 27 in dem Hauptkörper 2 ein und geben somit eine Relativbewegung zwischen Hauptkörper 2 und Trägeraufnahme 4 frei.

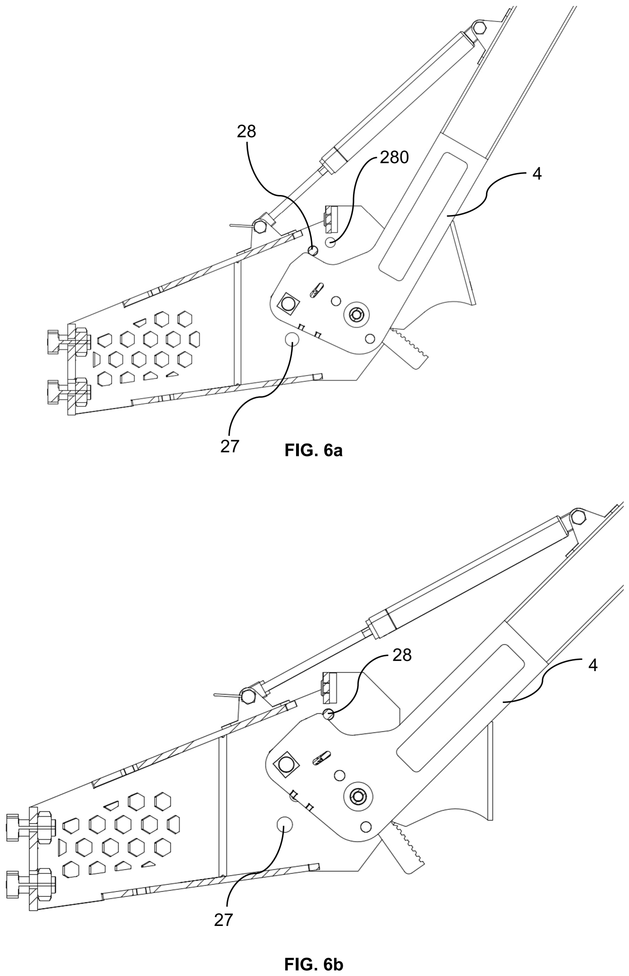

In Fig. 6a und Fig. 6b ist die Gelenkanbindung 1 jeweils in einer Anschlagsposition dargestellt. Wenn der Verriegelungsmechanismus 20 entriegelt wird, kann die Trägeraufnahme 4 relativ zu dem Hauptkörper 2 verdreht werden, und in eine Anschlagsposition überführt werden. In der Anschlagsposition ist eine Rotation von Trägeraufnahme 4 und Hauptkörper 2 relativ zueinander zumindest in einer Drehrichtung blockiert. In der in Fig. 6a und Fig. 6b dargestellten bevorzugten Ausführungsform gelangt die Trägeraufnahme 4 in der Anschlagsposition mit einem Endanschlag in Anlage. Anders ausgedrückt, die weitere Rotation von Trägeraufnahme 4 relativ zu dem Hauptkörper 2 wird durch einen Endanschlag blockiert. Der Endanschlag kann, wie dargestellt, als Endanschlagsbolzen 28 ausgeführt sein. Die in den Fig. 6a und Fig. 6b dargestellte bevorzugte Ausführungsform weist zwei Anschlagspositionen auf, wobei sich die Gelenkanbindung 1 in Fig. 6a in einer ersten Anschlagsposition befindet, in der die Trägeraufnahme 4 mit einem Endanschlagsbolzen 28 in Anlage gelangt, der durch eine erste Endanschlagsbohrung 280 im Hauptkörper 2 geführt ist. In Fig. 6b befindet sich die Gelenkanbindung 1 in einer zweiten Anschlagsposition, in der die Trägeraufnahme 4 mit einem Endanschlagsbolzen 28 in Anlage gelangt, der durch eine zweite Endanschlagsbohrung 280 im Hauptkörper 2 geführt ist, die zu der ersten Bohrung versetzt angeordnet ist. Auf diese Weise kann der Winkel, um den die Trägeraufnahme 4 beim Absenken von der Verriegelungsposition zu der Anschlagsposition verdreht wird, durch die Lage des Endanschlagsbolzens 28 eingestellt werden. Es ist bevorzugt, dass die Endanschlagsbohrungen 280 durch welche der Endanschlagbolzen geführt wird, so im Hauptkörper 2 angeordnet sind, dass die Trägeraufnahme 4 in einer ersten Anschlagsposition relativ zu einer Verriegelungsposition um 30° gekippt und in einer zweiten Anschlagsposition relativ zu einer Verriegelungsposition um 45° gekippt ist.

Alternativ zu der in den Fig. 6a und 6b gezeigten Ausführungsform kann eine Rotation von Trägeraufnahme 4 relativ zu dem Hauptkörper 2 auch dadurch verhindert werden, dass in dem Hauptkörper 2 eine oder mehrere weitere Ausnehmung 27 vorgesehen ist/sind, die zu der Ausnehmung 27 der Verriegelungsposition versetzt ist/sind. Auf diese Weise können die Verriegelungsbolzen 21 in der Anschlagsposition in dieser/diesen weiteren Ausnehmung(en) einrasten und in der Anschlagsposition eine weitere Rotation von Trägeraufnahme 4 zu dem Hauptkörper 2 blockieren. Vorteilhaft ist, dass durch diese Ausgestaltung die Trägeraufnahme 4 in der Anschlagsposition in beide Rotationsrichtungen gesichert, was bei einer Montage der Fahrräder an dem Träger 40 für eine gewisse Stabilität des Trägers 40 sorgen kann. Nachteilig ist jedoch, dass vor dem Zurückbewegen des Trägers 40 bzw. der Trägeraufnahme 4 in die Verriegelungsposition der Verriegelungsmechanismus 20 zuerst entriegelt werden muss.

Selbst wenn man bei der in Fig. 6a und Fig. 6b gezeigten Ausführungsform den Endanschlagsbolzen 28 entfernen oder bei der im obigen Absatz beschriebenen Ausführungsform den Verriegelungsmechanismus 20 in der Anschlagsposition entriegeln würde, so könnte eine weitere Verdrehung der Trägeraufnahme 4 zum Hauptkörper 2 durch eine maximale Länge der Gasfeder 60 oder des Dämpfers 61 begrenzt sein. Aus diesem Grund kann eine lösbare Befestigung 62 der Gasfeder 60 und/oder des Dämpfers 61 an dem Hauptkörper 2 und/oder dem Träger 40 bzw. der Trägeraufnahme 4 vorgesehen sein. Eine solche lösbare Befestigung kann beispielsweise ein Stift 62 sein, der zusätzlich einen Splint als Verliersicherung aufweisen kann. Wenn der Stift 62 entfernt und somit die Verbindung der Gasfeder 60 und/oder des Dämpfers 61 zu dem Hauptkörper 2 und/oder dem Träger 40 bzw. der Trägeraufnahme 4 gelöst wird, lässt sich die Trägeraufnahme 4 in eine horizontale Position und sogar noch darüber hinaus verdrehen. Dadurch ist es möglich, den Träger 40 des an einem Fahrzeug montierten Fahrradträgers 10 nach dem Entfernen des Stiftes 62 so weit abzusenken, dass der Träger 40 horizontal steht oder sogar auf dem Boden aufliegt. Auf diese Weise kann der Kofferraum des Fahrzeugs auch mit großen und sperrigen Gegenständen beladen werden.

Um ein unbeabsichtigtes Absenken des Trägers 40 zu verhindern, kann der Tritthebel 23 gegen unbeabsichtigte Betätigung geschützt werden. Dazu kann die Gelenkanbindung 1 ein als Abdeckblech ausgebildetes Abdeckelement 7 aufweisen, dass die Trittfläche 24 des Tritthebels 23 aus einer Richtung orthogonal zur Trittfläche 24 des Tritthebels 23 gesehen vollständig abdeckt. Die Trittfläche 24 ist dabei die im montierten Zustand nach oben weisende Fläche des Tritthebels 23, die von dem Hauptkörper 2 und der Trägeraufnahme 4 hervorsteht. Ein solches Abdeckelement 7 ist in den Ausführungsformen in den Fig. 1 bis Fig. 4b, sowie in Fig. 6a und Fig. 6b gezeigt. Durch das Abdeckelement 7 wird verhindert, dass von oben herabfallende Gegenstände die Trittfläche 24 des Tritthebels 23 treffen und dadurch den Tritthebel 23 unbeabsichtigt auslösen könnten. Das Abdeckelement 7 kann, wie in den Figuren dargestellt, geneigt ausgebildet sein und insbesondere derart geneigt, dass herabfallende Gegenstände nicht auf dem Abdeckelement 7 liegen bleiben, sondern durch die Neigung des Abdeckelements 7 an diesem herunter und am Tritthebel 23 vorbei rutschen.

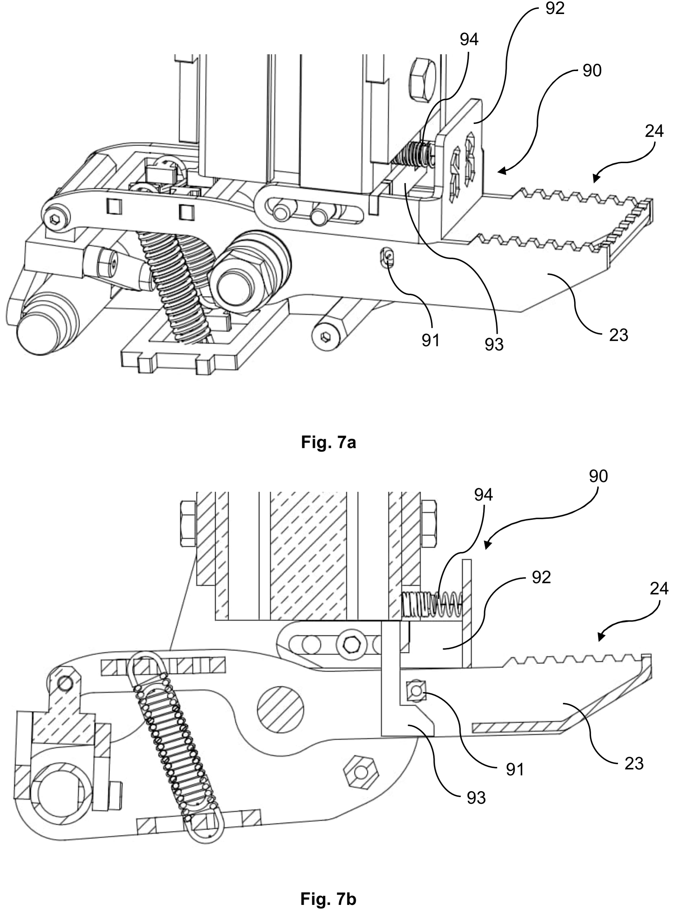

Alternativ oder zusätzlich kann, um ein unbeabsichtigtes Absenken des Trägers 40 zu verhindern, eine Tritthebelsicherung 90 vorgesehen sein, wie in Fig. 7a und Fig. 7b dargestellt. Die Tritthebelsicherung 90 weist eine Spange 92 und einen mit der Spange 92 verbundenen Anker 93 auf. Die Tritthebelsicherung 90 weist zusätzlich einen mit dem Tritthebel 23 verbundenen Steg 91 auf. In einer gesicherten Position ist der Anker 93 so unter dem Steg 91 positioniert, dass bei einer Betätigung bzw. Verdrehung des Tritthebels 23 der Steg 91 mit dem Anker 93 in Anlage gelangt und eine weitere Drehung des Tritthebels 23 blockiert, noch bevor das mit dem Tritthebel 23 verbundene Koppelelement 25 den/die Verriegelungsbolzen 21 aus einer verriegelten Position in eine entriegelte Position verschoben hat. Um den Verriegelungsmechanismus 20 freizugeben und ein Absenken des Trägers 40 zu ermöglichen, kann die Spange 92 etwa durch den Fuß eines Benutzers so verschoben werden, dass der mit der Spange 92 verbundene Anker 93 so weit von dem Steg 91 verschoben wird, dass bei Betätigung bzw. Verdrehung des Tritthebels 23 der Steg 91 nicht mehr mit dem Anker 93 in Anlage gelangt. Zur Freigabe des Verriegelungsmechanismus 20 reicht es, wenn der Steg 91 mit dem Anker 93 zumindest nicht in Anlage gelangt, bevor das mit dem Tritthebel 23 verbundene Koppelelement 25 den/die Verriegelungsbolzen 21 aus einer verriegelten Position in eine entriegelte Position verschoben hat. Die Spange 92 kann mit einer Feder 94 in eine gesicherte Position vorgespannt sein, sodass der Anker 93 über die auf die Spange 92 wirkende Federkraft in der Position unter dem Steg 91 gehalten wird, in welcher er bei Betätigung bzw. Verdrehung des Tritthebels 23 mit dem Steg 91 in Anlage gelangt. Dazu ist in der in Fig. 7a und Fig. 7b gezeigten Ausführungsform zwischen der Trägeraufnahme 4 und einer der Trägeraufnahme 4 zugewandten Seite der Spange 92 eine Druckfeder 94 vorgesehen. Die Spange 92 kann zur Führung einer Bewegung beim Verschieben des Ankers 93 ein Langloch oder mehrere Langlöcher aufweisen.

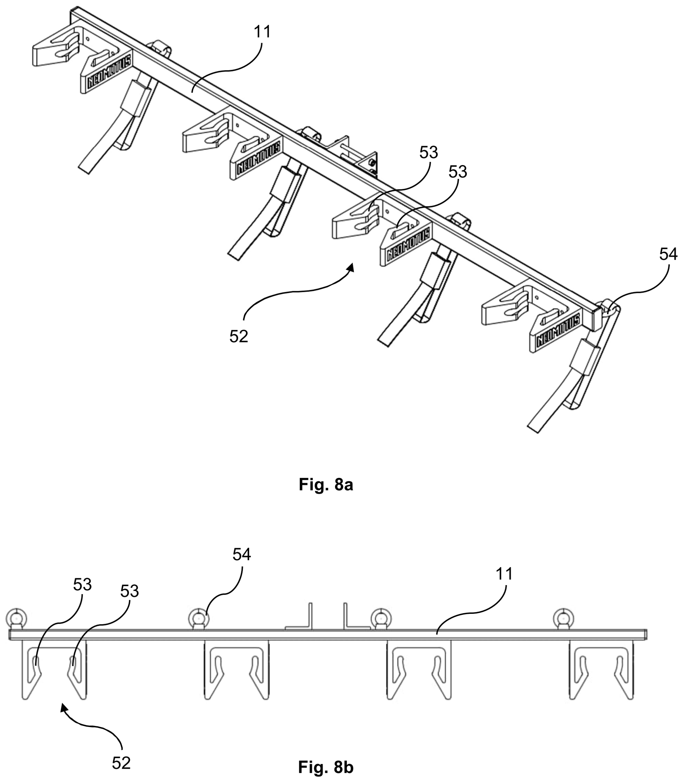

In Fig. 8a und Fig. 8b ist eine alternative Ausführungsform der oben beschriebenen und am Querträger 11 angeordneten Elemente 50, 53 zum Halten eines Laufrades eines zu befestigenden Fahrrades dargestellt. Die Elemente können, wie dargestellt, als Klammern 52 ausgeführt sein. Jede Klammer 52 weist zwei einander zugewandte und vorzugsweise federnd ausgebildete Schenkel 53 aus. Die Klammer 52 kann im Wesentlichen U-förmig ausgebildet sein, wobei die beiden Schenkel 53 jeweils an den Enden der U-Form ausgebildet sind und in das Innere der Klammer 52 weisen. Die beiden einander zugewandten Schenkel 53 müssen dabei nicht parallel zueinander sein. Vorteilhafterweise können sie gekrümmt ausgeführt sein und zudem der Kontur eines von der Klammer 52 zu haltenden Laufrades folgen. Ja nach Material und Verwendeter Wandstärke lässt sich die Klemmkraft der Klammer 52 bedarfsgerecht einstellen. Diese Ausführungsform hat zudem den Vorteil, dass die Elemente verglichen mit einem Paar von Bürsten 50 weniger leicht verschmutzen, insbesondere wenn das zu haltende Laufrad durch nassen Schlamm verdreckt ist.

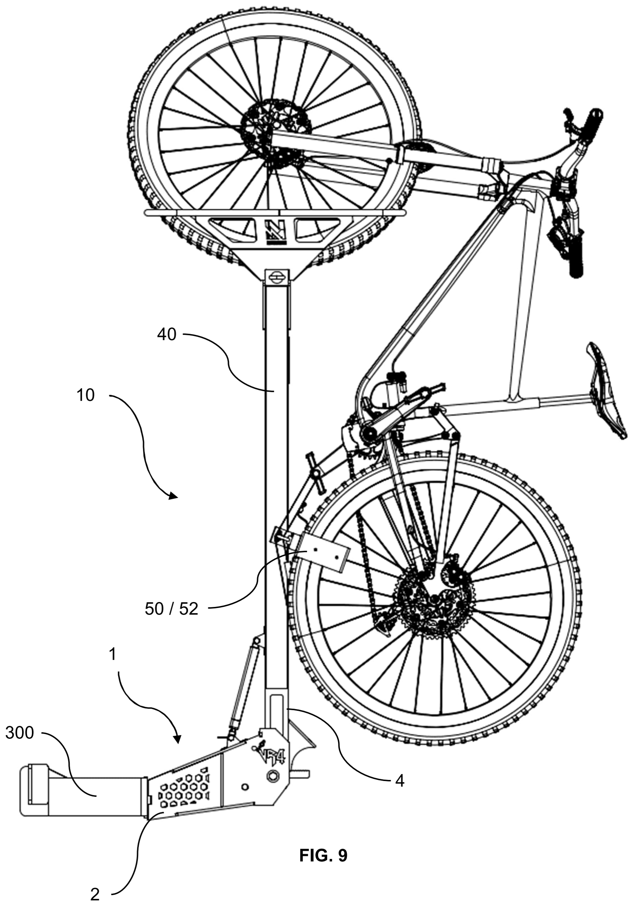

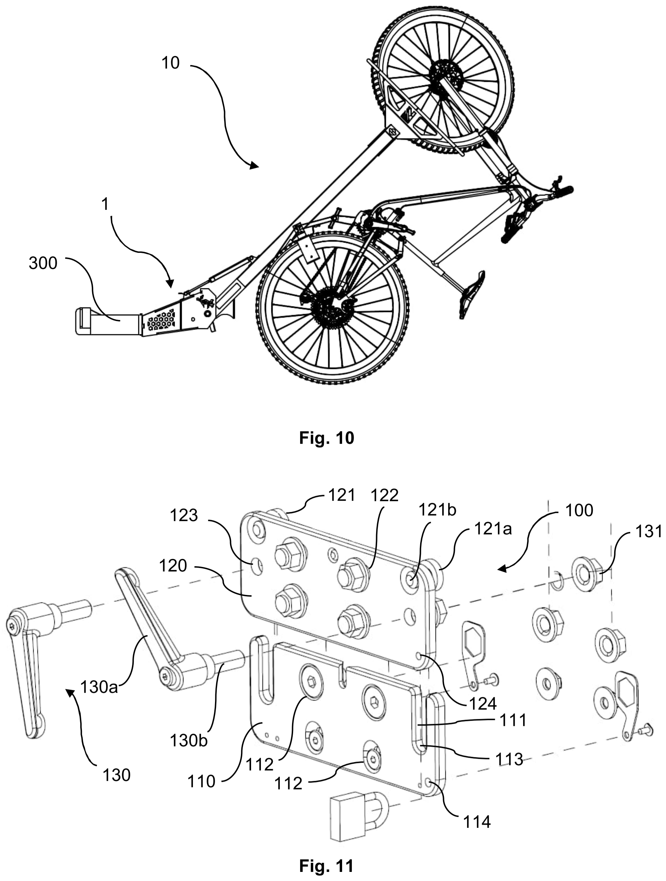

In Fig. 9 und Fig. 10 ist ein Fahrradträger 10 gemäß einer Ausführungsform der vorliegenden Erfindung mit daran befestigtem Fahrrad dargestellt, wobei sich der Träger 40 in Fig. 9 in einer Verriegelungsposition befindet, in welcher der Träger 40 im Wesentlichen vertikal steht und der Träger 40 sich in Fig. 10 in einer Anschlagsposition befindet, in welcher Träger 40 relativ zu einer Vertikalen um 30° bis 45° verdreht ist. In der in Fig. 9 dargestellten Verriegelungsposition kann das Fahrrad sicher transportiert werden, ohne, dass sich die Gesamthöhe des Fahrzeugs stark erhöht oder die Schwerpunktlage des Fahrzeugs sich weit nach hinten verschiebt. In der in Fig. 10 dargestellten Anschlagsposition kann das hintere Laufrad von einem Benutzer leicht aus dem Element 50, 53 zum Halten eines Laufrades gezogen und das vordere Laufrad leicht aus dem Korb 80 gehoben werden. Ferner lässt/lassen sich in dieser Position die Heckklappe oder die Heckflügeltüren des Fahrzeugs öffnen, ohne mit dem Träger 40 oder dem Fahrrad zu kollidieren. Die Anhängerkupplung 300 ist Teil des Fahrzeugs und als optionales Zubehör bzw. Sonderausstattung fest an dem Fahrzeug montiert.

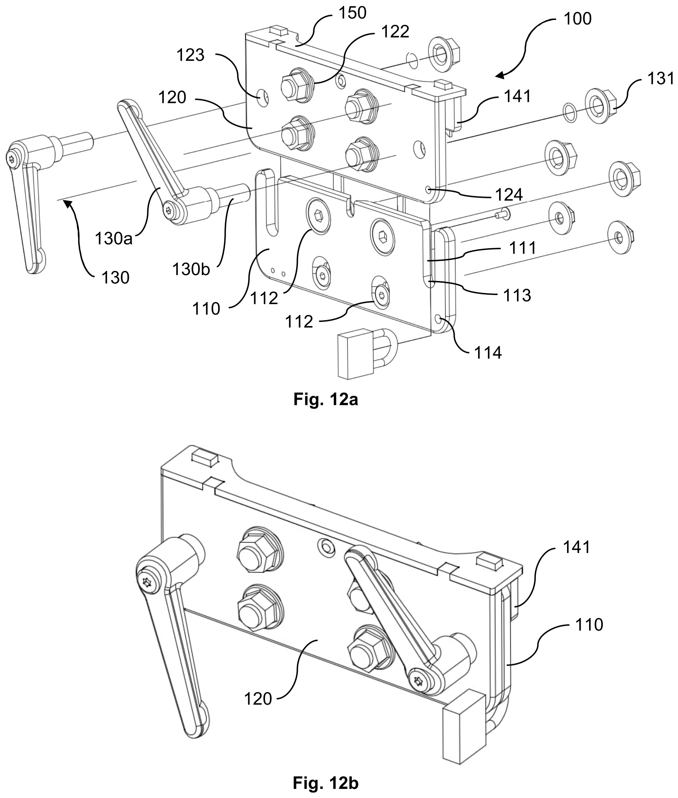

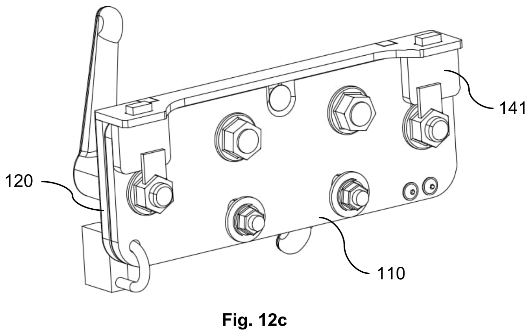

In Fig. 11 und Fig. 12a bis 12c ist jeweils ein Wechselsystem 100 dargestellt, das vorzugsweise zwischen der Anhängerkupplung 300 und der Gelenkanbindung 1 angeordnet werden kann, um diese lösbar miteinander zu verbinden.

Konventionelle Wechselsysteme werden üblicherweise verwendet, um die flexible Nutzung sowohl von Kugelkopfkupplungen als auch von Bolzenkupplungen an der Anhängerkupplung eines Fahrzeugs zu ermöglichen. Dazu wird ein Teil des Wechselsystems an der Anhängerkupplung und ein anderer Teil des Wechselsystems an der Kugelkopfkupplung bzw. der Bolzenkupplung befestigt. Durch das Zusammenfügen der beiden Teile des Wechselsystems entsteht dann eine Verbindung zwischen der Anhängerkupplung und der Kugelkopfkupplung bzw. Bolzenkupplung. Ein weiterer Nutzen liegt darin, dass die Kugelkopfkupplung und die Bolzenkupplung in einfacher Weise von der Anhängerkupplung des Fahrzeugs abgenommen werden können, wenn diese nicht benötigt werden. Dazu wird das Wechselsystem geöffnet und die Kugelkopfkupplung bzw. die Bolzenkupplung mitsamt dem daran befestigten Teil des Wechselsystems abgenommen. Der andere Teil des Wechselsystems verbleibt an der Anhängerkupplung befestigt. Üblicherweise werden solche konventionellen Wechselsysteme dadurch geöffnet und geschlossen, dass die beiden Teile des Wechselsystems zueinander verdreht werden, um ineinander einzugreifen bzw. deren Eingriff zu lösen. In einer anderen Variante eines konventionellen Wechselssystems weisen beide Teile des Wechselsystems Löcher auf, die miteinander in Übereinstimmung gebracht werden und durch die ein Sicherungsbolzen geführt wird.

Gemäß einer bevorzugten Ausführungsform der vorliegenden Erfindung kann ein Wechselsystem, beispielsweise ein zuvor beschriebenes konventionelles Wechselsystem, zwischen der Anhängerkupplung 300 und der Gelenkanbindung 1 angeordnet sein. Auf diese Weise kann die Gelenkanbindung 1 bzw. der Fahrradträger 10 ohne zusätzliches Werkzeug von der Anhängerkupplung 300 abgenommen werden, wenn diese/r nicht benötigt wird, und ebenfalls ohne zusätzliches Werkzeug wieder an der Anhängerkupplung 300 befestigt werden, wenn diese/r wieder benötigt wird.

Unter Umständen kann es jedoch unbequem sein, konventionelle Wechselsysteme wie oben beschrieben einzusetzen. Bei konventionellen Wechselsystemen, die durch relatives Verdrehen der beiden Teile des Wechselsystems zueinander geöffnet und geschlossen werden, kann eine Drehung des Teils des Wechselsystems, an dem die Gelenkanbindung oder der Fahrradträger befestigt sind, relativ zu dem an der Anhängerkupplung befestigten Teil des Wechselsystems schwer sein. Gleiches gilt für die andere Variante eines konventionellen Wechselsystems, das dadurch geschlossen und geöffnet wird, dass Löcher, die an den beiden Teilen des Wechselsystems vorhanden sind, miteinander in Übereinstimmung gebracht werden und anschließend ein Sicherungsbolzen durch diese Löcher hindurchgeführt wird. Denn auch hier kann es unbequem sein, die beiden Teile des Wechselsystems miteinander zu verbinden oder voneinander zu trennen. Wenn eine Gelenkanbindung oder ein Fahrradträger an dem einem Teil des Wechselsystems befestigt ist, dessen Löcher mit den Löchern des anderen an der Anhängerkupplung befestigten Teils des Wechselsystems in Übereinstimmung gebracht werden müssen, damit ein Sicherungsbolzen dadurch geführt werden kann, kann die Gewichtskraft der Gelenkanbindung oder des Fahrradträgers es erschweren, die Löcher der beiden Teile des Wechselsystems miteinander in Übereinstimmung zu bringen.

Besonders vorteilhaft und bevorzugt ist daher die Anordnung eines besonderen Wechselsystems zwischen der Anhängerkupplung 300 und der Gelenkanbindung 1, wie es in Fig. 11 und Fig. 12a bis 12c dargestellt ist. Dieses besondere Wechselsystem stellt bereits für sich genommen eine Weiterentwicklung dar. Es kann zum einen zur Verbindung einer Anhängerkupplung mit einem konventionellen Fahrradträger, einer Kugelkopfkupplung, einer Bolzenkupplung oder weiterem Fahrzeugzubehör verwendet werden. Zum anderen kann es zur Verbindung einer Anhängerkupplung 300 mit der Gelenkanbindung 1 bzw. dem Fahrradträger 10 verwendet werden, mit denen die konstruktiven Merkmale des besonderen Wechselsystems 100 besonders vorteilhaft zusammenwirken, wie aus der nachfolgenden Beschreibung hervorgeht.

Eine erste Ausführungsform des besonderen Wechselsystems ist in Fig. 11 gezeigt. Das besondere Wechselsystem 100 weist ein erstes Plattenteil 110 und ein zweites Plattenteil 120 auf. Das erste Plattenteil 110 weist zumindest eine, vorzugsweise zwei, Ausnehmung(en) 111 auf, die sich vorzugsweise länglich erstrecken und die zu einer Seite des Plattenteils 110 geöffnet sind. Das zweite Plattenteil 120 weist einen, vorzugsweise zwei, Kopfbolzen 121 auf. Der Kopfbolzen 121 weist einen Kopf 121a und einen Schaft 121b auf. Der Schaft 121b hat einen Durchmesser, der kleiner ist, als eine Breite der Ausnehmung 111. Folglich kann der Schaft 121b des Kopfbolzens 121 in der Ausnehmung 111 aufgenommen werden. Der Kopf 121a hat einen Durchmesser, der größer ist, als eine Breite der Ausnehmung 111. Folglich kann der Kopf 121a des Kopfbolzens 121 nicht in der Ausnehmung 11 aufgenommen werden, sondern gelangt an einer Fläche des ersten Plattenteils 110 zur Anlage, die im montierten Zustand der Anhängerkupplung 300 zugewandt ist, wenn der Schaft 121b des Kopfbolzens 121 in der Ausnehmung 111 des ersten Plattenteils 110 aufgenommen ist. Wenn sich die Ausnehmung 111 länglich erstreckt, erstreckt sie sich vorzugsweise in einer im montierten Zustand vertikalen Richtung. Wenn mehrere der Ausnehmungen 111 vorgesehen sind und sich diese länglich erstrecken, erstrecken sie sich vorzugsweise parallel.

Durch die Verwendung des ersten Plattenteils 110 und des zweiten Plattenteils 120 als zwei Hälften des Wechselsystem ist es möglich, eine besonders flache Bauweise zu realisieren. Wenn das besondere Wechselsystem geöffnet und einer der beiden Plattenteile abgenommen wird, verbleibt nur noch ein Plattenteil an der Anhängerkupplung, das vom Fahrzeug nicht weit nach hinten hervorsteht. Durch den Kopfbolzen 121 und die Ausnehmung 111 ist es möglich, das besondere Wechselsystem 100 zu schließen und zu öffnen, das heißt das erste Plattenteil 110 und das zweite Plattenteil 120 miteinander in Eingriff zu bringen, ohne dass das erste Plattenteil 110 und das zweite Plattenteil 120 zueinander verdreht werden müssen. Das ist insbesondere bei der Gelenkanbindung 1 und dem Fahrradträger 10 der vorliegenden Offenbarung vorteilhaft, da es wegen der Oberstrebe 12 und der Querstrebe 11 schwer sein kann, das an der Gelenkanbindung 1 befestigte Plattenteil 110 oder 120 relativ zu dem an der Anhängerkupplung 300 befestigten Plattenteil 120 oder 110 zu verdrehen. Ferner ist es auch nicht notwendig, dass ein Benutzer die Gewichtskraft der Gelenkanbindung 1 oder des Fahrradträgers 10 über längere Zeit abstützt, um etwa Bohrungen an dem ersten Plattenteil und dem zweiten Plattenteil in Übereinstimmung zu bringen. Dadurch wird die schnelle Montage der Gelenkanbindung 1 bzw. des Fahrradträgers 10 an der Anhängerkupplung 300 im Vergleich zu konventionellen Wechselsystemen erheblich erleichtert.

Das erste Plattenteil 110 kann eine, vorzugsweise zwei, weiter vorzugsweise vier Befestigungsöffnungen 112 aufweisen. Die Befestigungsöffnung 112 dient der Befestigung des ersten Plattenteils 110 an der Anhängerkupplung 300 oder an der Gelenkanbindung 1.

Die vorzugsweise zwei, weitervorzugsweise vier Befestigungsöffnungen 112 können einem Lochbild der Anhängerkupplung 300 oder der Gelenkanbindung 1 entsprechen. Bei den vorzugsweise vier Befestigungsöffnungen 112 sind zwei der vier Befestigungsöffnungen vorzugsweise als Langlöcher ausgebildet. In ähnlicher Weise kann das zweite Plattenteil 120 eine, vorzugsweise zwei, weiter vorzugsweise vier Befestigungsöffnungen 122 aufweisen. Die Befestigungsöffnung 122 dient der Befestigung des zweiten Plattenteils 120 an der Gelenkanbindung 1 oder an der Anhängerkupplung 300. Die vorzugsweise zwei, weitervorzugsweise vier Befestigungsöffnungen 122 können einem Lochbild der Gelenkanbindung 1 oder der Anhängerkupplung 300 entsprechen. Bei den vorzugsweise vier Befestigungsöffnungen 122 sind zwei der vier Befestigungsöffnungen vorzugsweise als Langlöcher ausgebildet.

Das besondere Wechselsystem 100 weist vorzugsweise ferner zumindest einen, vorzugsweise zwei Klemmhebelgriffe 130 auf. Der Klemmhebelgriff 130 weist einen Griffabschnitt 130a und einen Gewindestangenabschnitt 130b auf. Der zweite Plattenabschnitt 120 kann eine Klemmhebelgrifföffnung 123 aufweisen, die ausgestaltet ist, um den Gewindestangenabschnitt 130b aufzunehmen. Die Klemmhebelgrifföffnung 123 kann als Öffnung ausgebildet sein, die einen Durchmesser aufweist, der größer ist als der Durchmesser des Gewindestangenabschnitts 130. Der erste Plattenabschnitt 110 kann einen Klemmhebelgrifföffnung 113 aufweisen, die als separate Öffnung ausgebildet ist oder die ein Abschnitt der Ausnehmung 111 ist. Wenn die Klemmhebelgrifföffnung 113 als separate Öffnung ausgebildet ist, kann sie als Gewindebohrung ausgebildet sein. Wenn die Klemmhebelgrifföffnung 113 ein Abschnitt der Ausnehmung 111 ist, kann das Wechselsystem 100 ferner eine Klemmhebelgriffmutter 131 aufweisen.

Mittels des zumindest einen Klemmhebelgriffs 130 ist es möglich, das erste Plattenteil 110 und das zweite Plattenteil 120 gegen eine Relativbewegung zueinander zu sichern, insbesondere wenn der Kopfbolzen 121 in der Ausnehmung 111 aufgenommen ist. Auf diese Weise kann verhindert werden, dass sich das besondere Wechselsystem 100 nach einem Schließen, das heißt, nach einem Zusammensetzen des ersten Plattenteils 110 und des zweiten Plattenteils 120 ungewollt löst und die Gelenkanbindung 1 oder der Fahrradträger 10 sich ungewollt von der Anhängerkupplung 300 löst. Durch das Vorsehen des zumindest einen Klemmhebelgriffs 130 ist es möglich, das besondere Wechselsystem 100 ohne Werkzeug zu öffnen und zu schließen, das heißt, das erste Plattenteil 110 und das zweite Plattenteil 120 ohne Werkzeug miteinander zu verbinden und zu sichern bzw. zu entsichern und voneinander zu trennen.

Das erste Plattenteil 110 und das zweite Plattenteil 120 können ferner jeweils eine Sicherungsöffnung 114, 124 aufweisen, die so angeordnet sind, dass die in einem geschlossenen Zustand, in dem der Kopfbolzen 121 in der Ausnehmung 111 aufgenommen ist, einander gegenüberliegen. Vorteilhafterweise kann durch diese Sicherungsöffnungen 114 und 124 ein Vorhängeschloss oder ein ähnlicher Verschlussmechanismus geführt werden, der verhindert, dass das erste Plattenteil 110 und das zweite Plattenteil 120 separiert werden.

Durch diese Ausgestaltung kann verhindert werden, dass die Gelenkanbindung 1 bzw. der Fahrradträger 10 durch Unbefugte von der Anhängerkupplung 300 abgenommen wird.

Eine zweite Ausführungsform des besonderen Wechselsystems ist in den Fig. 12a bis 12c gezeigt. Die zweite Ausführungsform unterscheidet sich von der ersten Ausführungsform im Wesentlichen dadurch, wie das erste Plattenteil 110 und das zweite Plattenteil 120 miteinander in Eingriff gebracht werden. Während in der ersten Ausführungsform dazu an dem zweiten Plattenteil 120 zumindest ein Kopfbolzen 121 vorgesehen ist, ist in der zweiten Ausführungsform dazu zumindest ein Klauenabschnitt 141 vorgesehen. Es können auch zwei oder mehr Klauenabschnitte 141 vorgesehen sein. Die weiteren Merkmale der ersten Ausführungsform können auch in der zweiten Ausführungsform vorgesehen sein und umgekehrt. Auf eine Wiederholung der Beschreibung dieser Merkmale wird aus Gründen der Übersichtlichkeit verzichtet.

Der Klauenabschnitt 141 kann plattenartig ausgebildet, von dem zweiten Plattenteil 120 beabstandet und vorzugsweise parallel dazu vorgesehen sein. Ein Abstand zwischen dem Klauenabschnitt 141 und dem zweiten Plattenteil 120 kann einer Dicke des ersten Plattenteils 110 entsprechen. Auf diese Weise kann ein Abschnitt des ersten Plattenteils 110 zwischen dem Klauenabschnitt 141 und dem zweiten Plattenteil 120 aufgenommen werden.

Durch den zum zweiten Plattenteil 120 beabstandet angeordneten Klauenabschnitt 141 ist es möglich, das besondere Wechselsystem 100 zu schließen und zu öffnen, das heißt das erste Plattenteil 110 und das zweite Plattenteil 120 miteinander in Eingriff zu bringen, ohne dass das erste Plattenteil 110 und das zweite Plattenteil 120 zueinander verdreht werden müssen. Das ist insbesondere bei der Gelenkanbindung 1 und dem Fahrradträger 10 der vorliegenden Offenbarung vorteilhaft, da es wegen der Oberstrebe 12 und der Querstrebe 11 schwer sein kann, das an der Gelenkanbindung 1 befestigte Plattenteil 110 oder 120 relativ zu dem an der Anhängerkupplung 300 befestigten Plattenteil 120 oder 110 zu verdrehen. Ferner ist es auch nicht notwendig, dass ein Benutzer die Gewichtskraft der Gelenkanbindung 1 oder des Fahrradträgers 10 über längere Zeit abstützt, um etwa Bohrungen an dem ersten Plattenteil und dem zweiten Plattenteil in Übereinstimmung zu bringen. Dadurch wird die schnelle Montage der Gelenkanbindung 1 bzw. des Fahrradträgers 10 an der Anhängerkupplung 300 im Vergleich zu konventionellen Wechselsystemen erheblich erleichtert.

An einer vorzugsweise im montierten Zustand nach oben weisenden Kante des zweiten Plattenteils 120 kann ein Versteifungsblech 150 vorgesehen sein. Das Versteifungsblech 150 kann sich in einer Ebene erstrecken, die senkrecht zu einer Ebene ist, in welcher sich das zweite Plattenteil 120 erstreckt. Der zumindest eine Klauenabschnitt 141 kann über das Versteifungsblech 150 mit dem zweiten Plattenteil 120 verbunden sein.

Mittels des Versteifungsblechs 150 ist es möglich, ein Durchbiegen des zweiten Plattenteils 120 auch bei einer hohen Zugbelastung infolge eines besonders hohen Gewichts der Gelenkanbindung oder des Fahrradträgers zu verhindern.

### Bezugszeichenliste:

- 1: Gelenkanbindung
- 10: Fahrradträger
- 11: Querträger
- 12: Oberstrebe
- 100: Besonderes Wechselsystem
- 110: Erstes Plattenteil
- 111: Ausnehmung
- 112: Befestigungsöffnung
- 113: Klemmhebelgrifföffnung
- 114: Sicherungsöffnung
- 120: Zweites Plattenteil
- 121: Kopfbolzen
- 121a: Kopf
- 121b: Schaft
- 122: Befestigungsöffnung
- 123: Klemmhebelgrifföffnung
- 124: Sicherungsöffnung
- 130: Klemmhebelgriff
- 130a: Griffabschnitt
- 130b: Gewindestangenabschnitt
- 131: Klemmhebelgriffmutter
- 141: Klauenabschnitt
- 150: Versteifungsblech
- 2: Hauptkörper
- 20: Verriegelungsmechanismus
- 21: Verriegelungsbolzen
- 22: Hülse
- 23: Tritthebel
- 24: Trittfläche
- 25: Koppelelement
- 250: weiteres Element
- 26: Feder
- 27: Ausnehmung
- 28: Endanschlag, Endanschlagsbolzen
- 280: Endanschlagsbohrung
- 30: Anbindung
- 31: Bohrungen
- 300: Anhängerkupplung
- 4: Trägeraufnahme
- 40: Träger
- 50: Paar von Bürsten
- 51: Borsten
- 52: Klammer
- 53: Schenkel
- 54: Öse
- 6: Achse
- 60: Gasfeder
- 61: Dämpfer
- 62: Lösbare Befestigung, Stift
- 7: Abdeckelement
- 80: Korb
- 81: Öffnung
- 90: Tritthebelsicherung
- 91: Steg
- 92: Spange
- 93: Anker
- 94: Feder

## Patentansprüche

1. Gelenkanbindung (1) für einen Fahrradträger (10), aufweisend:
einen Hauptkörper (2) mit einer Anbindung (30) für eine Anhängerkupplung (300),
eine Trägeraufnahme (4) zur Aufnahme eines Trägers (40),
eine Achse (6) zur drehbaren Lagerung von Hauptkörper (2) und Trägeraufnahme (4), und
einen Verriegelungsmechanismus (20) zur Blockierung und Freigabe einer Rotation von Trägeraufnahme (4) und Hauptkörper (2) relativ zueinander um die Achse (6);
**dadurch gekennzeichnet, dass**
der Verriegelungsmechanismus (20) zumindest einen, vorzugsweise zwei, in eine zur Axialrichtung der Achse (6) parallele Verriegelungsrichtung verschiebbar angeordnete Verriegelungsbolzen (21) aufweist.

2. Gelenkanbindung nach Anspruch 1, wobei
der Verriegelungsmechanismus (20) eine Hülse (22) aufweist, die mit der Trägeraufnahme (4) verbunden ist und innerhalb derer der/die Verriegelungsbolzen (21) axial geführt angeordnet sind.

3. Gelenkanbindung (1) nach Anspruch 1 oder 2, wobei
der Verriegelungsmechanismus (20) ferner Folgendes aufweist:
einen Tritthebel (23), der vorzugsweise um die Achse (6) drehbar gelagert ist, und
ein Koppelelement (25), das mit dem Tritthebel (23) und dem Verriegelungsbolzen (21) jeweils gelenkig verbunden ist; wobei
der Tritthebel (23) zur Trägeraufnahme (4) derart federvorgespannt ist, dass der Verriegelungsbolzen (21) über das Koppelelement (25) in der Verriegelungsrichtung nach außen gedrückt wird.

4. Gelenkanbindung (1) nach Anspruch 3, wobei
der Tritthebel (23) dadurch zur Trägeraufnahme (4) vorgespannt ist, dass
zumindest eine Feder (26), vorzugsweise Zugfeder, zwischen Tritthebel (23) und Trägeraufnahme (4) angeordnet ist, und/oder dass
zumindest eine Feder, vorzugsweise Druckfeder, an einer ins Innere des Hauptkörpers (2) weisenden Stirnseite des Verriegelungsbolzens (21) angeordnet ist.

5. Gelenkanbindung (1) nach Anspruch 3 oder 4, die ferner
ein Abdeckelement (7) aufweist, das in einer Draufsicht auf eine Trittfläche (24) des Tritthebels (23) den Tritthebel (23) vollständig abdeckt, und/oder
eine Tritthebelsicherung (90) aufweist, die
einen mit dem Tritthebel (23) verbundenen Steg (91),
eine Spange (92), und
einen mit der Spange (92) verbundenen Anker (93) aufweist, wobei
der Anker (93) so angeordnet ist, dass er in einer gesicherten Position mit dem Steg (91) in Anlage gelangt und eine Bewegung des Tritthebels (23) sperrt und in einer entsicherten Position den Steg (91) freigibt und eine Bewegung des Tritthebels (23) ermöglicht.

6. Gelenkanbindung nach einem der vorhergehenden Ansprüche, die
in eine Verriegelungsposition überführbar ist, in der eine Rotation zwischen Trägeraufnahme (4) und Hauptkörper (2) durch den Verriegelungsmechanismus (20) blockiert ist, und
in eine, vorzugsweise in zwei, von der Verriegelungsposition verschiedene Anschlagsposition(en) überführbar ist, in der/denen eine Rotation zwischen Trägeraufnahme (4) und Hauptkörper (2) zumindest in eine Drehrichtung blockiert ist.

7. Gelenkanbindung nach Anspruch 6, wobei
in der Verriegelungsposition der Verriegelungsbolzen (21) in eine Ausnehmung (27) im Hauptkörper (2) eingreift, und
in der/den Anschlagsposition(en)
der Verriegelungsbolzen (21) in eine weitere Ausnehmung im Hauptkörper eingreift, und/oder
die Trägeraufnahme (4) an einem mit dem Hauptkörper verbundenen, vorzugsweise als Endanschlagsbolzen (28) ausgeführten Endanschlag zur Anlage gelangt.

8. Gelenkanbindung nach Anspruch 6 oder 7, wobei
in der/den Anschlagsposition(en) ein Winkel zwischen einer Linie, die parallel zu einer Seitenfläche der Trägeraufnahme (4) verläuft und einer Linie, die senkrecht zu der Anbindung (30) des Hauptkörpers (2) verläuft, größer ist als in der Verriegelungsposition, wobei vorzugsweise
in der Verriegelungsposition der Winkel 80° oder mehr und 100° oder weniger, vorzugsweise 85° oder mehr und 95° oder weniger beträgt, und
in der/den Anschlagsposition(en) der Winkel 115° oder mehr und 145° oder weniger, vorzugsweise 120° oder mehr und 140° oder weniger, noch bevorzugter 125° oder mehr und 135° oder weniger beträgt.

9. Gelenkanbindung nach einem der vorherigen Ansprüche, wobei
die Anbindung (30) für eine Anhängerkupplung als ebene Flanschplatte (30) ausgeführt ist, die eine oder mehrere Bohrungen (31) aufweist, die vorzugsweise einem standardisierten Lochbild einer Anhängerkupplung (300) entsprechen.

10. Gelenkanbindung nach einem der vorherigen Ansprüche, die ferner
ein Wechselsystem (100) aufweist, das an der Anbindung (30) des Hauptkörpers (2) zur Verbindung mit der Anhängerkupplung (300) vorgesehen ist, wobei das Wechselsystem (100) vorzugsweise Folgendes aufweist:
ein erstes Plattenteil (110) mit zumindest einer Ausnehmung (111), und
ein zweites Plattenteil (120) mit
zumindest einem Kopfbolzen (121), der einen Kopf (121a) und einen Schaft (121b) aufweist, oder mit
zumindest einem Klauenabschnitt (141), der von dem zweiten Plattenteil (120) beanstandet angeordnet ist.

11. Fahrradträger (10), der Folgendes aufweist:
die Gelenkanbindung (1) nach einem der Ansprüche 1 bis 10,
einen Träger (40), der an einem Ende mit der Trägeraufnahme (4) verbunden oder einstückig mit der Trägeraufnahme (4) ausgebildet ist,
zumindest einen Korb (80), zur Aufnahme eines Laufrades eines Fahrrades, der an einem anderen Ende des Trägers (40) angeordnet ist, und
eine Querstrebe (11), die an dem Träger (40) befestigt ist und sich im Wesentlichen quer zu einer Längsachse des Trägers (40) erstreckt.

12. Fahrradträger (10) nach Anspruch 11, wobei
der Träger (40) und die Querstrebe (11) derart ausgestaltet sind, dass die Querstrebe (11) an verschiedenen Positionen entlang einer Längsrichtung des Trägers (40) befestigt werden kann, sodass ein Abstand zwischen Korb (80) und Querstrebe (11) einstellbar ist, und/oder
der Träger (40) vorzugsweise eine Länge von 1,10 m oder mehr und 1,50 m oder weniger, noch bevorzugter eine Länge von 1,10 m oder mehr und 1,30 m oder weniger, oder 1,30 m oder mehr und 1,50 m oder weniger, am bevorzugtesten eine Länge von 1,15 m oder mehr und 1,25 m oder weniger, oder 1,35 m oder mehr und 1,45 m oder weniger aufweist.

13. Fahrradträger (10) nach Anspruch 11 oder 12, wobei
die Querstrebe (11) ferner Folgendes aufweist:
zumindest ein Paar von Bürsten (50), die mit ihren Borsten (51) einander zugewandt sind und deren Borsten (51) vorzugsweise so angeordnet sind, dass die Borsten (51) der einen Bürste des Paares von Bürsten (50) zu den Borsten (51) der anderen Bürste des Paares von Bürsten (50) gewinkelt angeordnet sind, wobei die Borsten (51) beider Bürsten vorzugsweise in Richtung der Querstrebe (11) weisen, und/oder
zumindest eine Klammer (52), die zwei einander zugewandte, vorzugsweise federnd ausgebildete Schenkel (53) zur Aufnahme eines weiteren Laufrades des Fahrrades aufweist, und
optional pro Paar von Bürsten (50) und/oder pro Klammer (52) eine Öse (54) zur Durchführung eines über das Pedal eines Fahrrades zu legenden Spanngurtes.

14. Fahrradträger (10) nach einem der Ansprüche 11 bis 13, der ferner Folgendes aufweist:
eine Gasfeder (60), vorzugsweise eine Gaszugfeder, die mit dem Hauptkörper (2) und dem Träger (40) oder der Trägeraufnahme (4) verbunden ist; und
optional einen Dämpfer (61) mit einstellbarer Zugstufe und/oder einstellbarer Druckstufe, der mit dem Hauptkörper (2) und dem Träger (40) oder der Trägeraufnahme (4) verbunden ist und vorzugsweise parallel zu der Gasfeder (60) angeordnet ist.

15. Fahrradträger (10) nach einem der Ansprüche 11 bis 14, der ferner
eine Oberstrebe (12) aufweist, die an einem von der Trägeraufnahme (4) abgewandten Ende des Trägers (40) befestigt ist und sich im Wesentlichen quer zur Längsachse des Trägers (40) erstreckt, wobei
der zumindest eine Korb (80) an der Oberstrebe (12) befestigt ist und eine Öffnung (81) zum Einsetzen eines Laufrades eines Fahrrades aufweist, wobei
die Öffnung (81) in einer Draufsicht auf die Öffnung (81) einen Winkel zu der Oberstrebe (12) von 75° oder mehr und weniger als 90°, vorzugsweise von 78° oder mehr und 85° oder weniger, noch bevorzugter von 81° aufweist.
